(19) 
Europäisches Patentamt
European Patent Office
Office européen des brevets

(11) **EP 4 460 114 A1**

(12) **EUROPEAN PATENT APPLICATION**
published in accordance with Art. 153(4) EPC

(43) Date of publication:
**06.11.2024 Bulletin 2024/45**

(21) Application number: **23762751.8**

(22) Date of filing: **17.02.2023**

(51) International Patent Classification (IPC):
*H04W 52/36* (2009.01)

(52) Cooperative Patent Classification (CPC):
**H04W 52/14; H04W 52/36**

(86) International application number:
**PCT/CN2023/076902**

(87) International publication number:
**WO 2023/165350 (07.09.2023 Gazette 2023/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.03.2022 CN 202210218301**

(71) Applicant: **Huawei Technologies Co., Ltd. Shenzhen, Guangdong 518129 (CN)**

(72) Inventor: **FAN, Bo Shenzhen, Guangdong 518129 (CN)**

(74) Representative: **Goddar, Heinz J. Boehmert & Boehmert Anwaltspartnerschaft mbB Pettenkoferstrasse 22 80336 München (DE)**

(54) **METHOD AND APPARATUS FOR POWER HEADROOM REPORTING**

(57) A power headroom reporting method and an apparatus are provided. The method includes: A terminal determines a power headroom based on a maximum transmit power of the terminal and a sum of expected transmit powers respectively corresponding to at least two antenna panels or transmission beams in the terminal. The terminal sends indication information of the power headroom to a network device. According to the method and the apparatus, in a scenario in which the terminal performs uplink transmission by using a plurality of antenna panels, each antenna panel corresponds to one transmission beam, so that the terminal can accurately report the power headroom, thereby facilitating subsequent uplink transmission scheduling and power control performed by a base station, and improving performance of the uplink transmission performed based on the plurality of antenna panels.

FIG. 4

**Description**

**CROSS-REFERENCE TO RELATED APPLICATIONS**

This application claims priority to Chinese Patent Application No. 202210218301.6, filed with the China National Intellectual Property Administration on March 3, 2022 and entitled "POWER HEADROOM REPORTING METHOD AND APPARATUS", which is incorporated herein by reference in its entirety.

**TECHNICAL FIELD**

This application relates to the field of communication technologies, and in particular, to a power headroom reporting method and an apparatus.

**BACKGROUND**

In a wireless communication system, a single base station or a plurality of base stations may be used to perform transmission with a terminal. Transmission based on a single base station is referred to as single-station transmission, and transmission based on a plurality of base stations is referred to as multi-station transmission. In addition, the terminal may also perform transmission with the base station by using one or more antenna panels. Transmission based on a single antenna panel is referred to as single-panel transmission, and transmission based on a plurality of antenna panels is referred to as multi-panel transmission. When the terminal performs the multi-panel transmission, signal propagation paths of uplink transmissions corresponding to the plurality of antenna panels may be different, and corresponding path losses may be different. Consequently, powers of the uplink transmissions corresponding to the plurality of antenna panels are also different. A transmit power for an uplink transmission corresponding to each of the plurality of antenna panels needs to be adjusted based on a power headroom reported by the terminal. During the uplink transmission based on the plurality of antenna panels, each antenna panel corresponds to one transmission beam. How the terminal reports the power headroom to the base station is a problem worth studying.

**SUMMARY**

This application provides a power headroom reporting method and an apparatus, so that during uplink transmission based on a plurality of antenna panels, each antenna panel corresponds to one transmission beam, and a terminal reports a power headroom to a base station.

According to a first aspect, a power headroom reporting method is provided. The method is performed by a terminal, or a component (a processor, a chip, a circuit, or the like) disposed in the terminal, or may be a software module. The method includes: sending first indication information to a network device, where the first indication information indicates a power headroom, and the power headroom is a power headroom determined based on a maximum transmit power of the terminal and expected transmit powers respectively corresponding to at least two antenna panels or transmission beams in the terminal. It should be noted that, in a design of the first aspect, each antenna panel or transmission beam corresponds to one expected transmit power. In this design, the power headroom is determined based on the maximum transmit power of the terminal and a sum of the expected transmit powers of a plurality of antenna panels in the terminal.

According to the foregoing method, the terminal determines the power headroom based on the maximum transmit power of the terminal and the expected transmit powers of the plurality of antenna panels in the terminal. For example, the power headroom is equal to a difference between the maximum transmit power of the terminal device and the sum of the expected transmit powers of the plurality of antenna panels in the terminal. In an uplink transmission mode based on a plurality of antenna panels, the terminal reports an accurate power headroom to a base station, so that the base station optimizes subsequent uplink transmission scheduling and power control based on the power headroom reported by the terminal, thereby improving performance of uplink transmission performed based on the plurality of antenna panels.

In a design, a value of the power headroom indicated by the first indication information is equal to the difference between the maximum transmit power of the terminal and the sum of the expected transmit powers respectively corresponding to the at least two antenna panels or transmission beams in the terminal. For example, the sum of the expected transmit powers respectively corresponding to the at least two antenna panels or transmission beams in the terminal is determined; and the difference between the maximum transmit power of the terminal and the sum of the expected transmit powers respectively corresponding to the at least two antenna panels or transmission beams is determined, where a value of the difference is equal to the value of the power headroom reported by the terminal.

In a design, the power headroom is a real power headroom, the maximum transmit power of the terminal is a maximum transmit power used by the terminal during one uplink transmission, and the expected transmit power corresponding to each antenna panel or transmission beam is a transmit power that corresponds to each antenna panel or transmission beam and that is determined by the terminal based on a power control parameter and an uplink transmission scheduling parameter that are indicated by the network device.

In the foregoing design, the power headroom reported by the terminal to the base station is classified into the real power headroom and a virtual power headroom. The real power headroom is calculated by the terminal based on a power used for one real uplink transmission. The terminal may report the power headroom to the base station periodically or based on condition triggering or in another manner. When the terminal needs to report the power headroom next time, if the terminal has not performed the uplink transmission recently, only an approximate reference value can be calculated for the base station to reference. The reference value is referred to as the virtual power headroom. According to the foregoing method, during real power headroom reporting, the terminal determines the expected transmit power of each antenna panel based on the power control parameter and the uplink scheduling parameter that are indicated by the base station. The real power headroom is determined based on the maximum transmit power of the terminal and the sum of the expected transmit powers of the plurality of antenna panels. For example, the value of the real power headroom is equal to the difference between the maximum transmit power of the terminal and the sum of the expected transmit powers of the plurality of antenna panels. By using the foregoing method, the terminal can accurately report the real power headroom to the base station.

In a design, the power headroom is a virtual power headroom, the maximum transmit power of the terminal is a maximum transmit power used to determine the virtual power headroom, and the expected transmit power corresponding to each antenna panel or transmission beam is a transmit power that corresponds to each antenna panel or transmission beam and that is determined by the terminal based on a power control parameter indicated by the network device.

According to the foregoing method, before the virtual power headroom is reported, the terminal has not performed the uplink transmission once, and there is no corresponding uplink scheduling parameter. Therefore, the terminal determines the expected transmit power of each antenna panel based only on the power control parameter indicated by the base station. The terminal determines the virtual power headroom based on the maximum transmit power corresponding to the virtual power headroom and the expected transmit powers of the plurality of antenna panels. For example, the virtual power headroom is equal to a difference between a virtual maximum transmit power corresponding to the terminal and the sum of the expected transmit powers of the plurality of antenna panels. By using the foregoing method, the terminal can accurately report the virtual power headroom to the base station.

In a design, the method further includes: sending second indication information to the network device, where the second indication information indicates at least one of the following: a relationship between expected transmit powers respectively corresponding to different antenna panels or transmission beams, a relationship between path loss measurement values respectively corresponding to different antenna panels or transmission beams, or a power headroom corresponding to each antenna panel or transmission beam.

In the foregoing method, in addition to reporting the power headroom to the base station, the terminal further reports more related detail information to the base station. The detail information includes the foregoing relationship between the expected transmit powers corresponding to the different antenna panels, the relationship between the path loss measurement values of the different antenna panels, power headrooms corresponding to the different antenna panels, or the like. By reporting more detail information, the base station can better optimize the subsequent uplink transmission, thereby improving the performance of the uplink transmission performed based on the plurality of antenna panels.

In a design, the relationship between the expected transmit powers respectively corresponding to the different antenna panels or transmission beams includes a difference, a proportional relationship, or a value relationship between the expected transmit powers respectively corresponding to the different antenna panels or transmission beams.

In a design, the relationship between the path loss measurement values respectively corresponding to the different antenna panels or transmission beams includes a difference, a proportional relationship, or a value relationship between the path loss measurement values respectively corresponding to the different antenna panels or transmission beams.

In a design, the power headroom corresponding to each antenna panel or transmission beam is determined based on the maximum transmit power of the terminal and the expected transmit power corresponding to each antenna panel or transmission beam. For example, a value of the power headroom corresponding to one antenna panel or transmission beam is equal to a difference between the maximum transmit power of the terminal and an expected transmit power corresponding to the antenna panel or transmission beam.

According to a second aspect, a power headroom reporting method is provided. The method is performed by a terminal, or a component (a processor, a chip, a circuit, or the like) disposed in the terminal, or may be a software module. The method includes: sending third indication information to a network device, where the third indication information indicates power headrooms respectively corresponding to a plurality of antenna panels or transmission beams in the terminal; and the power headroom corresponding to each antenna panel or transmission beam is determined based on a maximum transmit power corresponding to each antenna panel or transmission beam and an expected transmit power corresponding to each antenna panel or transmission beam. It should be noted that, in a design of the second aspect, each antenna panel or transmission beam corresponds to one maximum transmit power, each antenna panel or transmission beam corresponds to one expected transmit power, and each antenna panel or transmission beam corresponds to one power headroom. The power headroom corresponding to one antenna panel or transmission beam is determined based on a maximum transmit power corresponding to the antenna panel or transmission beam and an expected transmit power corresponding to the antenna panel or transmission beam.

According to the foregoing method, the current maximum transmit power of the terminal is extended, and the maximum transmit power corresponding to each antenna panel is defined. The terminal determines, based on the maximum transmit power corresponding to each antenna panel and the expected transmit power corresponding to each antenna panel, the power headroom corresponding to each antenna panel, and reports the power headroom corresponding to each antenna panel to a base station. In comparison with a design, the terminal determines the power headroom based on the maximum transmit power of the terminal and the expected transmit power of the antenna panel, so that accuracy of the power headroom reported to the base station can be improved.

In a design, maximum transmit powers respectively corresponding to the plurality of antenna panels or transmission beams meet at least one of the following: a sum of the maximum transmit powers corresponding to the plurality of antenna panels or transmission beams does not exceed a first threshold; a sum of actual radiated powers of the maximum transmit powers corresponding to the plurality of antenna panels or transmission beams does not exceed a second threshold; or a peak effective isotropic radiated power EIRP of the maximum transmit power corresponding to each of the plurality of antenna panels or transmission beams does not exceed a third threshold and is not less than a fourth threshold.

In a design, the first threshold and the second threshold are preset maximum transmit power values.

In a design, the third threshold is a preset maximum value of the peak EIRP, or the third threshold is a preset maximum value of the peak EIRP minus an offset related to the antenna panel or transmission beam.

In a design, the fourth threshold is a preset minimum value of the peak EIRP plus a quantity related to power aggregation, and then minus a quantity related to power reduction and the offset related to the antenna panel or transmission beam.

According to the foregoing method, in uplink transmission based on the plurality of antenna panels, only a partial power can be allocated to each antenna panel. If the fourth threshold, that is, a lower limit of the peak EIRP, is set to an excessively high value, the terminal may fail to select the maximum transmit power that corresponds to each antenna panel and that meets a condition. In the foregoing design, the fourth threshold is set to the lower limit of the peak EIRP minus the offset related to the antenna panel. This avoids setting the lower limit of the peak EIRP to an excessively high value, and ensures that the terminal can select a transmit power that corresponds to each antenna panel and that meets a condition.

In a design, the power headrooms respectively corresponding to the plurality of antenna panels or transmission beams are all real power headrooms, the maximum transmit power corresponding to each antenna panel or transmission beam is a maximum transmit power that corresponds to each antenna panel or transmission beam and that is used by the terminal during one uplink transmission, and the expected transmit power corresponding to each antenna panel or transmission beam is a transmit power that corresponds to each antenna panel or transmission beam and that is determined by the terminal based on a power control parameter and an uplink transmission scheduling parameter that are indicated by the network device.

According to the foregoing method, the terminal reports the real power headroom corresponding to each of the plurality of antenna panels to the base station. The real power headroom of each antenna panel is equal to a difference between the maximum transmit power corresponding to the antenna panel and the expected transmit power corresponding to the antenna panel, and the expected transmit power of each antenna panel is determined based on the power parameter and the uplink scheduling parameter that are indicated by the base station. By using the foregoing method, the terminal can accurately report the real power headroom of each antenna panel to the base station.

In a design, the real power headrooms respectively corresponding to the plurality of antenna panels or the plurality of transmission beams are determined based on power control parameters and uplink scheduling parameters that respectively correspond to the plurality of antenna panels or the plurality of transmission beams during one uplink transmission.

In a design, the power headrooms of the plurality of antenna panels or transmission beams are all virtual power headrooms, the maximum transmit power corresponding to each antenna panel or transmission beam is a maximum transmit power used by each antenna panel or transmission beam to determine a virtual power headroom, and the expected transmit power corresponding to each antenna panel or transmission beam is a transmit power that corresponds to each antenna panel or transmission beam and that is determined by the terminal based on a power control parameter indicated by the network device.

According to the foregoing method, the terminal reports the virtual power headroom corresponding to each of the plurality of antenna panels to the base station. For example, the virtual power headroom of each antenna panel is equal to a difference between the maximum transmit power corresponding to the antenna panel and the expected transmit power corresponding to the antenna panel. The expected transmit power of each antenna panel is determined based on the power control parameter indicated by the base station. By using the foregoing method, the terminal can accurately report the virtual power headroom of each antenna panel to the base station.

According to a third aspect, an apparatus is provided. The apparatus includes corresponding units or modules for performing the method/operations/steps/actions described in the first aspect or the second aspect. The units or modules may be implemented by hardware circuits, software, or hardware circuits in combination with software.

According to a fourth aspect, an apparatus is provided. The apparatus includes a processor and a memory. The memory is configured to store a computer program instructions, and the processor is coupled to the memory. When the processor executes the computer program or the instructions, the apparatus is enabled to perform the method according to the first aspect or the second aspect.

According to a fifth aspect, an apparatus is provided. The apparatus includes a processor, and the processor may implement the method according to the first aspect or the second aspect.

Optionally, for the fourth aspect or the fifth aspect, the apparatus may further include a communication interface. The communication interface is used by the apparatus to communicate with another device, and the another device may be a network device. The communication interface may be a transceiver, a circuit, a bus, a module, a pin, a communication interface of another type, or the like.

According to a sixth aspect, a computer-readable storage medium is provided. The computer-readable storage medium stores a computer program or instructions. When the computer program or the instructions are run on a computer, the computer is enabled to perform the method according to the first aspect or the second aspect.

According to a seventh aspect, a computer program product is provided. The computer program product includes a computer program or instructions. When the computer program or the instructions are run on a computer, the computer is enabled to perform the method according to the first aspect or the second aspect.

According to an eighth aspect, a chip system is provided. The chip system includes a processor, and may further include a memory, and the chip system is configured to implement the method according to the first aspect or the second aspect. The chip system may include a chip, or may include a chip and another discrete component.

According to a ninth aspect, a system is provided. The system includes the apparatus according to the third aspect, the fourth aspect, or the fifth aspect, and a network device.

**BRIEF DESCRIPTION OF DRAWINGS**

FIG. 1 is a diagram of a communication system according to this application;
FIG. 2 is a diagram of multi-station transmission according to this application;
FIG. 3 is a diagram of reporting a power headroom corresponding to an antenna panel by a terminal according to this application;
FIG. 4, FIG. 5, FIG. 6, and FIG. 7 are flowcharts of a power headroom reporting method according to this application;
FIG. 8 and FIG. 9 are diagrams of structures of apparatuses according to this application; and
FIG. 10 is a diagram of a structure of a terminal according to this application.

**DESCRIPTION OF EMBODIMENTS**

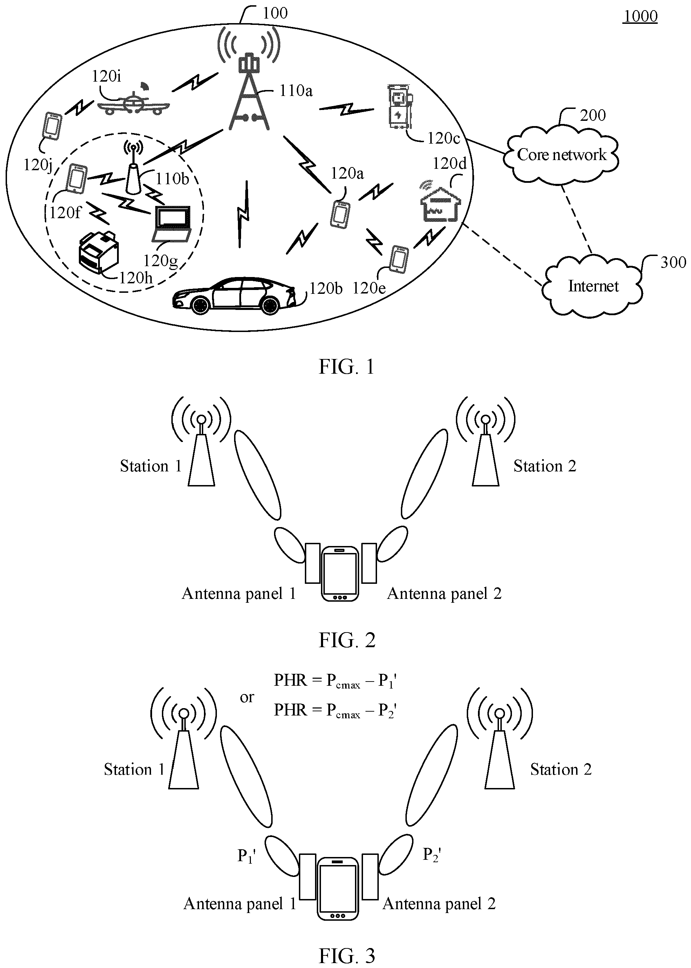

FIG. 1 is a diagram of an architecture of a communication system 1000 to which this application is applied. As shown in FIG. 1, the communication system 1000 includes a radio access network 100 and a core network 200. Optionally, the communication system 1000 may further include the internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be different standalone physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a wireless fidelity (wireless fidelity, Wi-Fi) system, or the like. The radio access network device may alternatively be a module or unit that completes some functions of a base station, for example, may be a central unit (central unit, CU), or may be a distributed unit (distributed unit, DU). The CU completes functions of the radio resource control (radio resource control, RRC) protocol and the packet data convergence layer protocol (packet data convergence protocol, PDCP) of a base station, and may further complete a function of the service data adaptation protocol (service data adaptation protocol, SDAP). The DU completes functions of a radio link control (radio link control, RLC) layer and a medium access control (medium access control, MAC) layer of a base station, and may further complete functions of a part or all of a physical (physical, PHY) layer. For specific descriptions of the foregoing protocol layers, refer to technical specifications related to the 3rd generation partnership project (3rd generation partnership project, 3GPP). The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in this application. For ease of description, the following provides descriptions by using an example in which the radio access network device is a base station.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in this application.

The base station and the terminal may be fixed or movable. The base station and the terminal may be deployed on land, indoor or outdoor, or may be handheld or vehicle-mounted; or may be deployed on the water; or may be deployed on an airplane, a balloon, or an artificial satellite in the air. Application scenarios of the base station and the terminal are not limited in this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal, in other words, communication between 110a and 120i is performed based on a radio air interface protocol. Certainly, communication between 110a and 120i may alternatively be performed based on an interface protocol between base stations. In this case, for 110a, 120i is also a base station. Therefore, the base station and the terminal may be collectively referred to as communication apparatuses, 110a and 110b in FIG. 1 each may be referred to as a communication apparatus having a base station function, and 120a to 120j in FIG. 1 each may be referred to as a communication apparatus having a terminal function.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum of 6 GHz or above, or may be simultaneously performed by using the spectrum below 6 GHz and the spectrum of 6 GHz or above. A spectrum resource used for wireless communication is not limited in this application.

In this application, a base station function may be performed by a module (for example, a chip) in the base station, or may be performed by a control subsystem including the base station function. The control subsystem including the base station function herein may be a control center in the foregoing application scenarios, such as smart grid, industrial control, smart transportation, and smart city. A terminal function may be performed by a module (for example, a chip or a modem) in the terminal, or may be performed by an apparatus including the terminal function.

In this application, the base station sends a downlink signal or downlink information to the terminal, where the downlink signal or the downlink information is carried on a downlink channel; and the terminal sends an uplink signal or uplink information to the base station, where the uplink signal or the uplink information is carried on an uplink channel. To communicate with the base station, the terminal needs to establish a wireless connection to a cell controlled by the base station. The cell that establishes the wireless connection to the terminal is referred to as a serving cell of the terminal. Communication between the terminal and the serving cell is subject to interference by a signal from a neighboring cell.

During uplink transmission, the terminal needs to determine a transmit power that should be used to transmit an uplink signal. The transmit power cannot be excessively high. Otherwise, strong interference is caused to the neighboring cell. The transmit power cannot be excessively low either. Otherwise, a signal received by the base station is excessively weak. A transmit power P of the terminal is determined in the following manner:

$$P = \begin{cases} \text{Pcmax}, & \text{if } P' > \text{Pcmax} \\ P', & \text{if } P' \leq \text{Pcmax} \end{cases}$$

Pcmax represents a maximum transmit power that can be used by the terminal, and P' is an expected transmit power calculated by the terminal based on a power control parameter and a current transmission scheduling status (for example, a quantity of frequency domain resources). When P' does not exceed Pcmax, the expected transmit power P' is used as the transmit power. When P' exceeds Pcmax, Pcmax is used as the transmit power.

The terminal reports a power headroom (power headroom, PHR) to the base station, so that the base station adjusts a scheduling policy for the terminal. For example, the base station adjusts the frequency domain resource scheduled by the terminal, a closed-loop power control adjustment value $P_{TPC}$, and the like. The PHR is classified into a real PHR and a virtual PHR. The real PHR is calculated by the terminal based on a power used for one real uplink transmission. For example, the real PHR = Pcmax - P', which is used to represent a difference between the maximum transmit power Pcmax of the terminal and the expected transmit power P'. When Pcmax > P', the PHR is a positive value, indicating that the expected transmit power calculated based on a current scheduling status is lower than the maximum transmit power of the terminal, in other words, there is a power headroom. The terminal may report the power headroom to the base station, so that the base station adjusts the scheduling policy. For example, during next transmission, the base station schedules more frequency domain resources for the terminal, or increases the closed-loop power control adjustment value $P_{TPC}$, to make use of the PHR. Alternatively, when Pcmax < P', the PHR is a negative value, indicating that the expected transmit power P' calculated based on a current scheduling status is greater than the maximum transmit power Pcmax of the terminal. When Pcmax is greater than P', only Pcmax can be used as the transmit power, which affects uplink transmission quality. The terminal reports the PHR to the base station, so that the base station adjusts the scheduling policy. For example, during next uplink transmission, the base station schedules fewer frequency domain resources for the terminal, or decreases the closed-loop power control adjustment value $P_{TPC}$, to avoid a case in which the expected transmit power P' exceeds Pcmax. The terminal may report the PHR to the base station periodically or based on condition triggering or in another manner. When the terminal needs to report the PHR, if the terminal has not performed uplink transmission within a period of time before a current time point, the terminal may report the virtual PHR to the base station.

The terminal may perform transmission with the base station by using one or more antenna panels. Transmission based on a single antenna panel is referred to as single-panel transmission, and transmission based on a plurality of antenna panels is referred to as multi-panel transmission. The antenna panel may be referred to as a panel for short, or referred to as an antenna array, and is used for beamforming. One antenna panel may form beams in different directions. For example, as shown in FIG. 2, the terminal includes an antenna panel 1 and an antenna panel 2. The terminal communicates with a station 1 by using the antenna panel 1, and communicates with a station 2 by using the antenna panel 2. According to a method specified in a current protocol, the terminal determines the expected transmit power P' of an antenna panel and the maximum transmit power Pcmax of the terminal, and reports PHR = Pcmax - P' to the base station. As shown in FIG. 3, the terminal may calculate an expected transmit power $P_1'$ corresponding to the antenna panel 1 and the maximum transmit power Pcmax of the terminal. A PHR reported by the terminal to the base station is equal to a difference between the maximum transmit power of the terminal and the expected transmit power corresponding to the antenna panel 1, that is, the PHR reported by the terminal to the base station is Pcmax - $P_1'$. Alternatively, the terminal may calculate an expected transmit power corresponding to the antenna panel 2 and the maximum transmit power of the terminal. A PHR reported by the terminal to the base station is equal to a difference between the maximum transmit power of the terminal and the expected transmit power corresponding to the antenna panel 2, that is, the PHR reported by the terminal to the base station is Pcmax - $P_2'$. In FIG. 3, the PHR is calculated by the terminal based on an expected transmit power corresponding to a single antenna panel. When the terminal performs the uplink transmission by using a plurality of antenna panels simultaneously, each antenna panel corresponds to one expected transmit power, and an actual PHR is less than a PHR calculated based on a single antenna panel. In other words, the PHR obtained by using a PHR reporting method in FIG. 3 is greater than an actual value. In this case, the base station cannot accurately perform power adjustment and scheduling optimization on the terminal based on the PHR reported by the terminal, thereby causing a transmission performance loss.

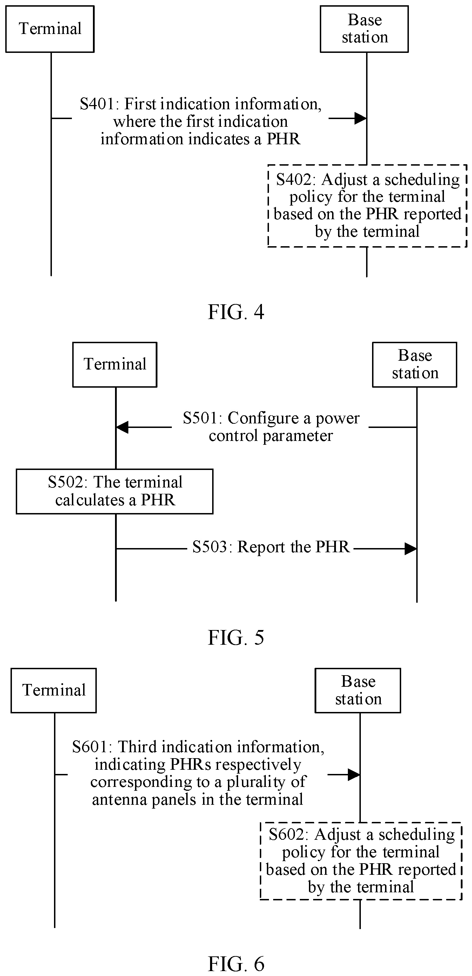

This application provides a PHR reporting method, including: when a terminal performs uplink transmission by using a plurality of antenna panels, determining a PHR based on a sum of a maximum transmit power of the terminal and expected transmit powers corresponding to the plurality of antenna panels. For example, the determined PHR is equal to a difference between the maximum transmit power of the terminal and the sum of the expected transmit powers corresponding to the plurality of antenna panels. Refer to FIG. 4. Alternatively, the terminal determines, based on a maximum transmit power corresponding to each of the plurality of antenna panels and the expected transmit power corresponding to each antenna panel, a PHR corresponding to each antenna panel; and the terminal reports the PHR corresponding to each antenna panel to a base station. Refer to FIG. 6.

For ease of understanding, communication terms in this application are described. The description is also used as a part of this application.

1. Antenna panel (panel)

An antenna panel may be an antenna panel of a terminal. One antenna panel may have one or more antenna array elements. The antenna array elements are arranged into an antenna array, and beamforming is performed, to form an analog beam. The antenna array may generate beams pointing to different directions. In other words, each antenna panel may form a beam, and a beam that should be used by each antenna panel may be determined through beam measurement.

The terminal may be equipped with a plurality of antenna panels. The antenna panels may be distributed at different positions, and face different directions. This can ensure that at least one antenna panel faces a base station regardless of a direction that the terminal faces, and the terminal can perform data transmission with the base station. The terminal may simultaneously turn on all antenna panels for transmission. Alternatively, to reduce power consumption of the terminal, the terminal may use only one antenna panel for transmission at a time, and may turn off an unused antenna panel. Generally, the terminal needs to notify the base station of whether the antenna panel of the terminal is in an on or off state. In other words, the terminal and the base station generally need to exchange status information of the antenna panel.

In this application, unless otherwise specified, the antenna panel is an antenna panel of the terminal. In a protocol, the antenna panel may be represented by a panel, a panel index, or the like. Optionally, the antenna panel may alternatively be implicitly represented in another manner. For example, the antenna panel may alternatively be represented by an antenna port, for example, a channel state information reference signal (channel state information reference signal, CSI-RS) port, a sounding reference signal (sounding reference signal, SRS) port, a demodulation reference signal (demodulation reference signal, DMRS) port, a phase tracking reference signal (phase tracking reference signal, PTRS) port, a cell reference signal (cell reference signal, CRS) port, a time-frequency tracking reference signal (tracking reference signal, TRS) port, or a synchronization signal and physical broadcast channel block (synchronization signal and physical broadcast channel block, SSB) port. Alternatively, the antenna panel may be represented by an antenna port group, where the antenna port group includes at least one antenna port, and the antenna port group may include antenna ports of a same type or different types. Alternatively, the antenna port may be represented by a channel feature, for example, a physical uplink control channel (physical uplink control channel, PUCCH), a physical uplink shared channel (physical uplink shared channel, PUSCH), a physical random access channel (physical random access channel, PRACH), a physical downlink shared channel (physical downlink shared channel, PDSCH), a physical downlink control channel (physical downlink control channel, PDCCH), or a physical broadcast channel (physical broadcast channel, PBCH). Alternatively, the antenna port is represented by a channel group, where the channel group includes at least one channel, and the channel group includes channels of a same type or different types. For example, the channel group may be a control channel group or the like. Alternatively, the antenna port may be represented by a terminal transmittability parameter group, for example, quasi-co-location (quasi-co-location, QCL), a transmission configuration indication-state (transmission configuration indication, TCI, TCI-state), or a spatial relation (spatial relation), or may be represented by an index (index) configured in the QCL, the TCI-state, or the spatial relation. Alternatively, the antenna panel may perform beamforming, the antenna panel may form a beam in a direction, and the antenna panel may be referred to as a beam. During uplink transmission, the antenna panel may be referred to as a transmission beam, or the like. The antenna panel in this application may be replaced with the foregoing content.

2. Beam

A beam is a special directional sending or receiving effect formed by a transmitter or a receiver of a base station or a terminal by using an antenna array, which is similar to a flashlight converging light to a direction to form a beam of light. Signal sending and receiving in a form of the beam can effectively increase a signal transmission distance.

The beam may be a wide beam, a narrow beam, or another type of beam. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, the base station measures different beams by using different resources, the terminal feeds back measured resource quality, and the base station knows quality of a corresponding beam. During data transmission, beam information is also indicated by a resource corresponding to the beam information. For example, the base station indicates a TCI-state by using a TCI field in downlink control information (down control information, DCI), and the terminal determines, based on a reference resource in the TCI-state, to use a beam corresponding to the reference resource.

In a communication protocol, a beam may be specifically represented as a digital beam, an analog beam, a spatial domain filter (spatial domain filter), a spatial filter (spatial filter), a spatial parameter (spatial parameter), a TCI, a TCI-state, or the like. A beam used to send a signal may be referred to as a transmission beam (transmission beam, or Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), or the like. A beam used to receive a signal may be referred to as a reception beam (reception beam, or Rx beam), a spatial domain reception filter (spatial domain reception filter), a spatial reception filter (spatial reception filter), a spatial domain reception parameter (spatial domain reception parameter), a spatial reception parameter (spatial reception parameter), or the like. The beam in this application may be replaced with the foregoing content.

3. Effective isotropic radiated power (effective isotropic radiated power, EIRP)

An EIRP is a product of a transmit power of a transmitter and an antenna gain in a given direction. Optionally, if both the transmit power and the antenna gain are represented in a unit of decibel (decibel, dB), the EIRP is represented as a sum of the transmit power and the antenna gain. The following uses dB as a unit for description. The EIRP is defined as: $EIRP = P + G$. P represents the transmit power of the transmitter, and G represents the antenna gain of a transmit antenna. When beamforming is performed by using an array antenna, the antenna gain is a beam gain corresponding to the beam. In other words, when the beamforming is performed by using the array antenna, G represents the beam gain corresponding to the beam. For example, the transmit power of the transmitter is 23 dBm, and when a beam is used for sending, the beam gain is 6 dB, and the EIRP of the transmitter is $23 + 6 = 29$ dBm. Optionally, beam gains in different beam directions may be different. Therefore, EIRPs corresponding to different beam directions may also be different. An EIRP corresponding to a beam with a maximum beam gain is the maximum, and may be referred to as a peak EIRP. For example, if the maximum beam gain is 9 dB, and the transmit power of the transmitter is 23 dBm, the peak EIRP of the transmitter is $23 + 9 = 32$ dBm.

It should be noted that dBm is a unit representing an absolute power value. For example, a formula for dBm calculation is $X\ mW = 10 * \log 10(X)$ dBm. For example, a transmit power $P_0 = 1000$ mW is equivalent to a transmit power $P_0 = 30$ dBm. dB is a value that represents a relative power value. Specifically, Y times $= 10 * \log 10(Y)$ dB. For example, if P2 is twice greater than P1, $10 * \log 10(P2/P1) = 3$ dB, in other words, P2 is 3 dB greater than P1. In the descriptions of this application, dBm is referred to as a logarithmic power unit, watt w, milliwatt mW, and the like may be referred to as a linear power unit, and the logarithmic power unit dBm is obtained through logarithmic conversion of the linear power unit. For example, as described above, $X\ mW = 10 * \log 10(X)$ dBm.

As shown in FIG. 4, this application provides a procedure of a power headroom PHR reporting method, including at least the following steps.

Step 401: A terminal sends first indication information to a base station, where the first indication information indicates a PHR.

For example, the terminal includes a plurality of antenna panels, and each antenna panel corresponds to one expected transmit power. The terminal determines expected transmit powers corresponding to the plurality of antenna panels and a maximum transmit power of the terminal. A value of the PHR reported by the terminal is equal to a difference between the maximum transmit power of the terminal and a sum of the expected transmit powers respectively corresponding to the plurality of antenna panels. An alternative description is: A value of the PHR calculated by the terminal is equal to a difference between the maximum transmit power of the terminal and a sum of the expected transmit powers respectively corresponding to the plurality of antenna panels. The terminal may send indication information of the calculated PHR, that is, the first indication information in step 401, to the base station. The first indication information may explicitly indicate the calculated PHR. For example, the first indication information may indicate a binary bit corresponding to the PHR. Alternatively, the first indication information may implicitly indicate the calculated PHR. For example, the first indication information may indicate other information related to the calculated PHR. The base station may calculate the corresponding PHR based on the other information. Alternatively, the terminal may directly report the calculated PHR to the base station. The description of step 401 may be replaced with the following: A terminal reports a PHR to a terminal. Alternatively, the terminal may send notification information to the base station, where the notification information carries the PHR calculated by the terminal. The description of step 401 may be replaced with the following: A terminal reports notification information to a base station, where the notification information carries a PHR calculated or reported by the terminal, and the like. In this application, the antenna panel may be referred to as a panel for short, and the antenna panel may alternatively be replaced with a name like transmission beam. For details, refer to the descriptions of the antenna panel or the beam in the foregoing communication terms.

In a design, the terminal may report a real PHR to the base station. The real PHR is calculated by the terminal based on a power used for one real uplink transmission. The real PHR is equal to a difference between a maximum transmit power Pcmax of the terminal and an expected transmit power P'. When Pcmax > P', the PHR is a positive value, indicating that the expected transmit power calculated based on a current scheduling status is lower than the maximum transmit power of the terminal, in other words, there is a power headroom. The terminal may report the headroom value to the base station, so that the base station adjusts a scheduling policy. For example, during next uplink transmission scheduling, the base station schedules more frequency domain resources for the terminal, or increases a closed-loop power control adjustment value $P_{TPC}$, to make use of the power headroom. When Pcmax < P', the PHR is a negative value, indicating that the expected transmit power calculated based on a current scheduling status is greater than the maximum transmit power of the terminal. When Pcmax < P', only Pcmax can be used as a transmit power, which affects uplink transmission quality. The terminal reports the PHR value to the base station, so that the base station adjusts a scheduling policy. For example, during next uplink transmission scheduling, the base station schedules fewer frequency domain resources for the terminal, or decreases a closed-loop power control adjustment value $P_{TPC}$, to avoid a case in which the expected transmit power P' exceeds Pcmax.

The terminal may determine the maximum transmit power Pcmax. The maximum transmit power Pcmax refers to a maximum transmit power used by the terminal during one transmission. For example, the terminal may select, from a Pcmax value range that meets the following Condition 1 and Condition 2, a proper value as Pcmax.

Condition 1: Ptmax ≤ TRPmax, where Ptamx represents a total power actually radiated from the terminal when the terminal performs transmission by using Pcmax, in other words, Pcmax is a maximum transmit power theoretically output by the terminal, and Ptmax is a maximum power actually radiated from the terminal. Pcmax and Ptmax may have different values. For example, because an energy loss is incurred when a signal passes through some components, the total power Ptmax that is actually radiated is less than Pcmax. As constrained by Condition 1, Pcmax selected by the terminal cannot cause total energy actually radiated to exceed a maximum value of a total transmit power TRPmax specified in a protocol.

Condition 2: EIRPmin + $\Delta P_{IBE}$ - MPR ≤ Pumax ≤ EIRPmax, where Pumax represents an EIRP in a direction of a strongest beam when the terminal uses Pcmax for actual transmission, and is referred to as a peak EIRP. EIRPmax is a maximum value of the peak EIRP specified in the protocol. The EIRP is a radiated power of the terminal in a specified direction, for example, a specified beam direction. In an ideal status, the EIRP is equal to a transmit power plus an antenna gain, where the antenna gain may be a beam gain of a beam, or the like. EIRPmin is a minimum value of the peak EIRP specified in the protocol. As constrained by Condition 2, Pcmax selected by the terminal cannot cause Pumax (the peak EIRP) to exceed the maximum value of the peak EIRP or cause Pumax to be lower than a lower limit of the peak EIRP. The lower limit of the peak EIRP is represented as the minimum value of the peak EIRP specified in the protocol plus a quantity $\Delta P_{IBE}$ related to power aggregation, and then minus a quantity related to power reduction, for example, a maximum power reduction (maximum output power reduction, MPR). During actual transmission, a high peak-to-average value of a signal may affect transmission efficiency, and therefore a transmit power has to be reduced. This phenomenon is power reduction. The power reduction of the terminal is related to a plurality of factors. Considering that the power reduction may exist in the terminal, the power reduction needs to be considered in a lower limit of the EIRP, in other words, the lower limit is set to EIRPmin - MPR (EIRPmin specified in the protocol is not directly used as the lower limit). MPR is a maximum power reduction, and is related to factors such as a waveform, a modulation scheme, frequency domain resource allocation, a regulation constraint of a maximum allowable radiation quantity, and measurement tolerance. Actually, MPR is a complex expression. For ease of description, a variable MPR is uniformly used for representation.

In Condition 2, EIRPmin + $\Delta P_{IBE}$ - MPR ≤ Pumax ≤ EIRPmax is a brief form. In a possible description, Condition 2 may be described as follows:

$$P_{Powerclass} + \Delta P_{IBE} - MAX(MAX(MPR_{f,c}, A\text{-}MPR_{f,c},) + \Delta MB_{P,n}, P\text{-}MPR_{f,c}) - MAX\{T(MAX(MPR_{f,c}, A\text{-}MPR_{f,c},)), T(P\text{-}MPR_{f,c})\} \leq P_{UMAX,f,c} \leq EIRP_{max}$$

In the foregoing description, an actual expression of the MPR may be considered as: $MAX(MAX(MPR_{f,c}, A\text{-}MPR_{f,c},) + \Delta MB_{P,n}, P\text{-}MPR_{f,c}) - MAX\{T(MAX(MPR_{f,c}, A\text{-}MPR_{f,c},)), T(P\text{-}MPR_{f,c})\}$. $P_{Powerclass}$ represents the minimum value of the peak EIRP specified in the protocol, $\Delta P_{IBE}$ represents a quantity related to power aggregation, $MPR_{f,c}$ represents a maximum output power reduction (maximum output power reduction) corresponding to a carrier f of a cell c, $A\text{-}MPR_{f,c}$ represents an additional maximum output power reduction (additional maximum power reduction) corresponding to the carrier f of the cell c, $P\text{-}MPR_{f,c}$ represents a power management UE maximum power reduction (power management UE maximum power reduction) corresponding to the carrier f of the cell c, $\Delta MB_{P,n}$ represents a relaxation quantity of the peak EIRP, T(X) is a formula and represents tolerance to X, $EIRP_{max}$ represents the maximum value of the peak EIRP specified in the protocol, and $P_{UMAX,f,c}$ represents a corresponding maximum transmit power used when the terminal sends an uplink signal on the carrier f of the cell c.

The terminal determines an expected transmit power corresponding to each of the plurality of antenna panels, where the expected transmit power is an expected transmit power that is of each antenna panel and that is determined by the terminal based on a power control parameter, an uplink scheduling parameter, and the like that are indicated by the base station. An alternative description is that during real PHR reporting, the expected transmit power of each antenna panel in the terminal is determined based on a power control parameter, an uplink scheduling parameter, and the like that are indicated by the base station. Optionally, the base station may configure a same power control parameter or different power control parameters for different antenna panels in the terminal. For example, the base station may configure a plurality of power control parameters for the terminal by using RRC signaling. The plurality of antenna panels in the terminal may share one set of power control parameters, or different antenna panels use different power control parameters. This is not limited. Each set of power control parameters configured by the base station for the terminal includes at least one of the following:

$P_0$: a target receive power of each resource block (resource block, RB). The RB may be an RB used by the terminal to send an uplink signal. The terminal sends the uplink signal on at least one RB, and the base station receives the uplink signal on a corresponding RB. The target receive power of each RB is a target power that the base station expects for receiving the uplink signal on each RB for sending the uplink signal.

Path loss (Path loss, PL) measurement resource: The base station configures the path loss measurement resource for the terminal, and the terminal measures a reference signal on the path loss measurement resource, to determine a signal energy loss from the base station to the terminal or from the terminal to the base station. The signal energy loss is referred to as a path loss PL.

a: a path loss compensation coefficient. A value of a ranges from 0 to 1, indicating a proportion of a path loss that an uplink transmit power needs to compensate for.

Closed-loop power control identifier (Close loop index): This application does not relate to specific details of a closed-loop power control identifier, and details are not described again.

During the real PHR reporting, a process in which the terminal determines an expected transmit power corresponding to one antenna panel is as follows:

$$P' = P_0 + P_{RB} + a*PL + P_{MCS} + P_{TPC}$$

P' represents the expected transmit power of the antenna panel in the terminal; $P_0$ represents the target receive power of one RB used by the terminal to transmit the uplink signal, and the target receive power is indicated by the base station to the terminal, in other words, the base station needs to indicate, to the terminal, a receive power on one RB that the base station expects; $P_{RB}$ represents an offset determined based on a quantity of RBs; $P_0 + P_{RB}$ represents a target receive power of $N_{RB}$ RBs; PL represents a loss of a signal from the terminal to the base station, and is referred to as the path loss. The PL is measured by the terminal based on the path loss measurement resource configured by the base station. a represents the path loss compensation coefficient, and a*PL represents a path loss that needs to be compensated for. a = 1 indicates that an entire path loss needs to be compensated for, and a < 1 indicates that only a partial path loss needs to be compensated for. The value of a is indicated by the base station to the terminal. $P_{MCS}$ is an offset related to a modulation and coding scheme (modulation and coding scheme, MCS). Whether to use the offset is configurable, to be specific, whether the terminal uses the offset to calculate P' is indicated by the base station to the terminal; $P_{TPC}$ is a power adjustment value indicated by closed-loop power control signaling sent by the base station to the terminal. The expected transmit power P' is calculated in units of dB and dBm. A unit of $P_0$ is dBm. The units of $P_{RB}$, PL, $P_{MCS}$, and $P_{TPC}$ are dB.

The foregoing describes a process in which the terminal determines the maximum transmit power Pcmax and the expected transmit power P' of one antenna panel during the real PHR reporting. In this application, the terminal may determine the real PHR based on the maximum transmit power Pcmax of the terminal and the sum of the expected transmit powers of the plurality of antenna panels. For example, a value of the real PHR is equal to a difference between the maximum transmit power of the terminal and the sum of the expected transmit powers of the plurality of antenna panels, for example:

$$PHR = Pcmax - \sum_{i=1}^{n} P_i'$$

PHR represents the real PHR reported by the terminal, Pcmax represents the maximum transmit power of the terminal, $P_i'$ represents an expected transmit power of an $i^{th}$ antenna panel in the terminal, a value of i is greater than or equal to 1 and less than or equal to n, and n represents a total quantity of antenna panels in the terminal.

An example in which the terminal includes two antenna panels is used. The real PHR reported by the terminal meets the following condition:

$$PHR = Pcmax - (P'_1 + P'_2)$$

PHR represents the real PHR reported by the terminal, Pcmax represents the maximum transmit power of the terminal, $P'_1$ represents an expected transmit power corresponding to an antenna panel 1 in the terminal, and $P'_2$ represents an expected transmit power corresponding to an antenna panel 2 in the terminal.

For example, a calculation method of $P'_1$ and $P'_2$ is the same as a calculation manner of P'. For example, when a value of $P'_1$ is calculated by using the foregoing calculation formula of P', each item on the right of the equal sign in the foregoing formula is determined based on a power control parameter, a scheduling parameter, and the like of the antenna panel 1 corresponding to $P'_1$, for example, $P_0$, a, PL, and the like are determined based on the power control parameter of the antenna panel 1 corresponding to $P'_1$, $P_{RB}$, $P_{MCS}$, and the like are determined based on the uplink transmission scheduling parameter corresponding to the antenna panel 1 corresponding to $P'_1$, and $P_{TPC}$ is an uplink transmission closed-loop power control adjustment value corresponding to the antenna panel 1 corresponding to $P'_1$. A calculation manner of $P'_2$ is similar, and details are not described again.

In another design, the PHR reported by the terminal is a virtual PHR. During virtual PHR reporting, the maximum transmit power of the terminal is a maximum transmit power used to determine the virtual power headroom, and may be represented as $\tilde{P}$cmax. The expected transmit power of the antenna panel is an expected transmit power that is of the antenna panel and that is determined by the terminal based on a power control parameter indicated by the base station, and may be considered as a reference transmit power, and may be represented as $\tilde{P}'$. The virtual power headroom $\widetilde{PHR} = \tilde{P}cmax - \tilde{P}'$. The virtual PHR is applicable to a scenario in which there is no uplink scheduling. For example, the PHR is periodically reported, and when the PHR is to be reported next time, no uplink transmission is performed recently. Therefore, only an approximate reference value can be calculated for the base station to reference.

A process in which the terminal determines the maximum transmit power Pcmax during the virtual PHR reporting is similar to a process in which the terminal determines the maximum transmit power Pcmax during the real PHR reporting. The terminal may select, from maximum transmit powers that meet the foregoing Condition 1 and Condition 2, a proper value as $\tilde{P}$cmax. Different from the real PHR reporting, during the virtual PHR reporting, in Condition 2 for determining the maximum transmit power of the terminal, a power reduction MPR is not considered, in other words, the MPR does not need to be subtracted from the lower limit of the peak EIRP EIRPmin on the left of the inequality in the foregoing Condition 2. For example, a proper value may be selected from maximum transmit powers that meet the following Condition 1 and Condition 2, and is used as $\tilde{P}$cmax.

$$\text{Condition 1: } Ptmax \leq TRPmax$$

$$\text{Condition 2: } EIRPmin \leq Pumax \leq EIRPmax$$

A difference between a process in which the terminal determines the expected transmit power P' of the antenna panel during virtual PHR reporting and a process in which the terminal determines the expected transmit power P' of the antenna panel during the real PHR reporting lies in that $P_{RB}$, $P_{mcs}$, and the like are not included on the right side of the foregoing formula for determining P', because the two items are mainly related to an actual quantity of frequency domain resources and the modulation and coding scheme; whereas during the virtual PHR reporting, there is no $P_{RB}$, $P_{mcs}$, or the like in calculation of the virtual PHR, because uplink transmission is actually not performed, and only a reference value is reported. In other words, during the virtual PHR reporting, P' is a fixed reference value calculated based on some fixed power control parameters. For example, during the virtual PHR reporting, the expected transmit power that is of the antenna panel and that is determined by the terminal meets the following condition. For specific meanings of parameters in the following formula, refer to the descriptions of the formula for determining P'.

$$\widetilde{P'} = P_0 + a*PL + P_{TPC}$$

The foregoing describes a process in which the terminal determines the maximum transmit power and the expected transmit power of one antenna panel during the virtual PHR reporting. The terminal may determine the virtual PHR based on the determined maximum transmit power and the expected transmit powers of the plurality of antenna panels. For example, a value of the virtual PHR is equal to a difference between the maximum transmit power of the terminal and the sum of the expected transmit powers of the plurality of antenna panels. For example, the virtual PHR reported by the terminal meets the following condition:

$$\widehat{PHR} = \widetilde{P}cmax - \sum_{i=1}^{n} \widetilde{P}'_i$$

$\widehat{PHR}$ represents the virtual power headroom, $\widetilde{P}cmax$ represents the virtual maximum transmit power of the terminal, $\widetilde{P}'_i$ represents a virtual expected transmit power corresponding to an $i^{th}$ antenna panel in the terminal, a value of i is a positive integer less than or equal to n, and n represents a total quantity of antenna panels in the terminal.

An example in which the terminal includes two antenna panels is used. A process in which the terminal determines the virtual PHR meets the following condition:

$$\widehat{PHR} = \widetilde{P}cmax - (\widetilde{P}'_1 + \widetilde{P}'_2)$$

$\widehat{PHR}$ represents the virtual power headroom; $\widetilde{P}cmax$ represents the virtual maximum transmit power of the terminal, and for a calculation process, refer to the foregoing descriptions; $\widetilde{P}'_1$ and $\widetilde{P}'_2$ respectively represent an expected transmit power corresponding to an antenna panel 1 and an expected transmit power corresponding to an antenna panel 2. $\widetilde{P}'_1$ and $\widetilde{P}'_2$ are calculated in a same method as $\widetilde{P'}$, and are also calculated by using a formula, provided that each item on the right of the equal sign in the foregoing formula of $\widetilde{P'}$ is changed to a parameter corresponding to each antenna panel. For example, when $\widetilde{P}'_1$ is calculated, each item on the right side of the equal sign in the foregoing formula of $\widetilde{P'}$ is determined based on a power control parameter and a scheduling parameter that correspond to the antenna panel 1. For example, $P_0$, a, PL, and the like are determined based on the power control parameter of the antenna panel 1, and $P_{RB}$, $P_{MCS}$, and the like are determined based on the uplink transmission scheduling parameter of the antenna panel 1. $P_{TPC}$ is an uplink transmission closed-loop power control adjustment value corresponding to the antenna panel 1. A process of determining $\widetilde{P}'_2$ is similar to the foregoing, and details are not described again.

Optionally, the real PHR or the virtual PHR may be reported at a cell level. To be specific, for each cell, the terminal reports only one PHR value, and the PHR may be a real PHR, a virtual PHR, or the like. Different PHR values may be reported for different cells.

Step 402: The base station adjusts the scheduling policy for the terminal based on the PHR reported by the terminal. Step 402 is optional.

An example in which the terminal reports the real PHR is used. If the value of the real PHR is a positive number, it indicates that the real expected transmit power calculated based on a current scheduling status is lower than the maximum transmit power of the terminal, in other words, there is a power headroom. In this case, during next transmission, the base station may schedule more frequency domain resources for the terminal, or increase the closed-loop power control adjustment value $P_{TPC}$, to make use of the power headroom. Alternatively, if the value of the PHR is a negative value, it indicates that the expected transmit power calculated based on a current scheduling status is greater than the maximum transmit power of the terminal. When the maximum transmit power of the terminal is less than the expected transmit power, the terminal can transmit an uplink signal only by using the maximum transmit power, which affects uplink transmission quality. When receiving the real PHR whose value is a negative value, during next transmission, the base station may schedule fewer frequency domain resources for the terminal, decrease the closed-loop power control adjustment value $P_{TPC}$, or the like, to avoid a case in which the expected transmit power calculated during the next transmission exceeds the maximum transmit power of the terminal, or the like.

Optionally, in addition to reporting, to the base station, the power headroom indicated by the first indication information, the terminal may further report more detail information about the power headroom indicated by second indication information, so that the base station can better optimize subsequent uplink transmission. The second indication information indicates at least one of the following: a relationship between the expected transmit powers corresponding to different antenna panels, a relationship between path loss measurement values corresponding to different antenna panels, and a power headroom corresponding to each antenna panel. For example, the relationship between the expected transmit powers corresponding to the different antenna panels includes a difference, a proportional relationship, a value relationship, or the like between the expected transmit powers corresponding to the different antenna panels. The relationship between the path loss measurement values corresponding to the different antenna panels includes a difference, a proportional relationship, or a value relationship between the path loss measurement values corresponding to the different antenna panels. Different from the foregoing description, the power headroom that corresponds to each antenna panel and that is reported in the second indication information is determined based on the maximum transmit power of the terminal and the expected transmit power of each antenna panel. An example in which the terminal includes two antenna panels is used. Power headrooms of the two antenna panels each are indicated in the second indication information, and the power headroom PHR may also be a real PHR or a virtual PHR. This is not limited. The real PHR is used as an example. A real power headroom of the antenna panel 1 is equal to a difference between the maximum transmit power Pcmax of the terminal and the expected transmit power $P'_1$ of the antenna panel 1, that is, $\mathrm{Pcmax} - P'_1$ . A real power headroom of the antenna panel 2 is equal to a difference between the maximum transmit power of the terminal and the expected transmit power $P'_2$ of the antenna panel 2, that is, $\mathrm{Pcmax} - P'_2$ . In this application, the second indication information and the first indication information in step 401 may be reported together. For example, the first indication information and the second indication information may be carried in a same message for reporting. For example, the terminal sends a MAC control element (control element, CE) to the base station, where the MAC CE includes the first indication information and the second indication information. Alternatively, the first indication information and the second indication information may be reported separately. For example, the first indication information and the second indication information may be carried in different messages for reporting. For example, the terminal separately sends a MAC CE 1 and a MAC CE 2 to the base station, where the MAC CE 1 includes the first indication information, and the MAC CE 2 includes the second indication information.

In the reporting procedure in FIG. 4, when the terminal performs the uplink transmission by using the plurality of antenna panels, the terminal determines the PHR based on the maximum transmit power of the terminal and the sum of the expected transmit powers of the plurality of antenna panels. In comparison, when the terminal performs the uplink transmission by using the plurality of antenna panels, the terminal determines the PHR based on the maximum transmit power of the terminal and the expected transmit power of one antenna panel, so that accuracy of determining the PHR by the terminal can be improved. In this case, the base station can accurately perform power adjustment and scheduling optimization on the terminal based on the PHR reported by the terminal, thereby improving performance of the uplink transmission performed based on the plurality of antenna panels.

As shown in FIG. 5, a power headroom reporting procedure is provided. The procedure in FIG. 5 may be used as a specific implementation of the procedure in FIG. 4, and includes at least the following steps.

Step 501: A base station configures a power control parameter for a terminal.

For example, the base station sends RRC configuration signaling to the terminal, where the RRC configuration signaling is used to configure the power control parameter for the terminal.

The RRC signaling may be used to configure one or more sets of power control parameters for an antenna panel in the terminal. For example, the base station may configure different power control parameters for different antenna panels in the terminal by using the RRC signaling. Alternatively, a set of power control parameters is configured for the terminal by using the RRC signaling, and a plurality of antenna panels in the terminal share the same set of power control parameters. Alternatively, at least two sets of power control parameters are configured for the terminal by using the RRC signaling. Some antenna panels in the terminal share a set of power control parameters. For example, if the terminal includes five antenna panels, and the base station configures four sets of power control parameters for the terminal by using the RRC signaling, two of the five antenna panels share a same set of power control parameters. The power control parameter configured by the base station for the terminal is mainly used by the terminal to determine an expected transmit power of the antenna panel. Each set of power control parameters includes at least one of the following: a target receive power $P_0$ corresponding to each RB, a path loss measurement resource, a path loss compensation coefficient a, a closed-loop power control identifier, or the like.

Step 502: The terminal calculates a PHR.

For example, each antenna panel has an independent set of power control parameters. During uplink transmission based on a plurality of antenna panels, the terminal may determine an expected transmit power of each antenna panel based on a power control parameter corresponding to each antenna panel, and the like. Certainly, during real PHR reporting, in a process of determining the expected transmit power of each antenna panel, impact of an uplink scheduling parameter corresponding to each antenna panel also needs to be considered. The terminal determines the PHR based on a maximum transmit power of the terminal and a sum of expected transmit powers of the plurality of antenna panels. For example, a value of the PHR is equal to a difference between the maximum transmit power of the terminal and the sum of the expected transmit powers of the plurality of antenna panels. The PHR is classified into a real PHR, a virtual PHR, and the like. For details, refer to the descriptions in FIG. 4.

Step 503: The terminal reports the PHR to the base station.

Optionally, to enable the base station to better optimize subsequent uplink transmission, in addition to reporting the PHR to the base station, the terminal may further report more power-related information to the base station. The more power-related information may be reported together with the PHR, or may be independently reported, or the like. This is not limited. An example in which the terminal includes two antenna panels is used. The power-related information additionally reported by the terminal includes at least one of the following:

a relationship between an expected transmit power corresponding to an antenna panel 1 and an expected transmit power corresponding to an antenna panel 2, where the relationship may be a difference, a proportional relationship, a value relationship, or the like between the two; and

a relationship between a path loss measurement value corresponding to the antenna panel 1 and a path loss measurement value corresponding to the antenna panel 2, where the relationship may be a difference, a proportional relationship, a value relationship, or the like between the two.

PHR1 is determined based on the maximum transmit power of the terminal and the expected transmit power corresponding to the antenna panel 1. For example, a value of $PHR_1$ is equal to a difference between the maximum transmit power of the terminal and the expected transmit power corresponding to the antenna panel 1.

Alternatively, $PHR_2$ is determined based on the maximum transmit power of the terminal and the expected transmit power corresponding to the antenna panel 2. For example, a value of PHR2 is equal to a difference between the maximum transmit power of the terminal and the expected transmit power corresponding to the antenna panel 2.

According to the foregoing method, in an uplink transmission mode in which the plurality of antenna panels are used, the terminal accurately reports a total power headroom to the base station, so that the base station optimizes subsequent uplink transmission scheduling and power control, thereby improving performance of the uplink transmission performed based on the plurality of antenna panels.

As shown in FIG. 6, this application further provides a procedure of a PHR reporting method. Different from the procedure in FIG. 4, in this procedure, a terminal reports a plurality of PHRs, and each PHR corresponds to one antenna panel. The PHR corresponding to each antenna panel is determined based on a maximum transmit power and an expected transmit power that correspond to the antenna panel. The procedure includes at least the following steps.

Step 601: The terminal sends third indication information to a base station, where the third indication information indicates PHRs respectively corresponding to a plurality of antenna panels in the terminal.

The power headroom corresponding to each antenna panel is determined based on the maximum transmit power corresponding to each antenna panel and the expected transmit power corresponding to each antenna panel. In this design, each antenna panel in the terminal corresponds to a maximum transmit power, an expected transmit power, and a power headroom. Different from the current solution, in this design, maximum transmit powers are allocated to different antenna panels in the terminal based on a maximum transmit power of the terminal. The power headroom corresponding to each antenna panel in the terminal is equal to a difference between the maximum transmit power corresponding to the antenna panel and the expected transmit power corresponding to each antenna panel. In this application, the third indication information in step 601 may explicitly indicate the PHRs of the plurality of antenna panels, or implicitly indicate the PHRs of the plurality of antenna panels. This is not limited. Optionally, the third indication information may be carried in one message, or the third indication information may be carried in different messages. The message may be a MAC CE or the like. For example, the terminal may send a plurality of MAC CEs to the base station, where the plurality of MAC CEs are used to indicate the PHRs of different antenna panels respectively. Alternatively, the terminal may send one MAC CE to the base station, where the MAC CE may indicate the PHRs of the plurality of antenna panels. Alternatively, the terminal may directly report the PHRs of the plurality of antenna panels to the base station. Step 601 may be replaced with: The terminal reports a PHR corresponding to each of a plurality of antenna panels to a base station. In the descriptions of this application, the antenna panel may be replaced with a name like transmission beam. For details, refer to the descriptions of the antenna panel or the beam in the foregoing communication terms.

For example, the terminal includes a plurality of antenna panels, and the terminal may determine the maximum transmit power corresponding to each antenna panel and the expected transmit power corresponding to each antenna panel. For any antenna panel i in the plurality of antenna panels, a PHR corresponding to the antenna panel i is equal to a difference between a maximum transmit power corresponding to the panel i and an expected transmit power corresponding to the panel i. For a process in which the terminal determines the expected transmit power corresponding to each antenna panel, refer to the descriptions in FIG. 4. In a design, the terminal may determine the maximum transmit power of the terminal based on the descriptions in FIG. 4. The terminal determines the maximum transmit powers of the different antenna panels in the terminal based on a quantity of antenna panels and the maximum transmit power of the terminal. For example, the terminal includes N antenna panels, where N is an integer greater than 1, the maximum transmit power of the antenna panel i is the maximum transmit power of the terminal/N, and i is an integer greater than or equal to 1 and less than N. Alternatively, similar to the process of determining the maximum transmit power of the terminal in FIG. 4, the terminal may determine the maximum transmit power of each of the plurality of antenna panels within a value range that meets a specific condition. For example, maximum transmit powers of the plurality of antenna panels meet at least one of the following:

Condition 1: A sum of the maximum transmit powers of the plurality of antenna panels does not exceed a first threshold;
Condition 2: A sum of actual radiated powers corresponding to the maximum transmit powers of the plurality of antenna panels does not exceed a second threshold; and
Condition 3: A peak EIRP corresponding to the maximum transmit power of each of the plurality of antenna panels does not exceed a third threshold and is not less than a fourth threshold.

The first threshold and the second threshold are preset (or protocol-specified) maximum transmit power values. The third threshold is a preset (or protocol-specified) maximum value of the peak EIRP, or the third threshold is a preset (or protocol-specified) maximum value of the peak EIRP minus an offset value Δpanel related to the antenna panel. The fourth threshold is a preset (or protocol-specified) minimum value of the peak EIRP plus a quantity $\Delta P_{IBE}$ related to power aggregation, minus a maximum power reduction MPR, and minus an offset. The offset may be a quantity Δpanel related to transmission for which the antenna panel is used. For example, when a single antenna panel is used for transmission, the offset does not exist, or a value of the offset is 0. The offset exists, or a value of the offset is not equal to 0, only when a plurality of antenna panels are used for simultaneous transmission. The value of the offset is related to a corresponding antenna panel, for example, related to a quantity of antenna ports of the antenna panel, a power amplifier parameter, and the like. The value of the offset may also be related to a quantity of antenna panels used for simultaneous transmission. For example, when two antenna panels are used for simultaneous transmission, the offset is equal to 3 dB.

In a design, the terminal may report a real PHR to the base station. The real PHR is calculated by the terminal based on a power used for one real uplink transmission. In this design, the terminal may report a real PHR corresponding to each antenna panel to the base station. The real PHR of each antenna panel is equal to a difference between the maximum transmit power corresponding to each antenna panel and the expected transmit power corresponding to each antenna panel. The maximum transmit power corresponding to each antenna panel is a maximum transmit power that corresponds to each antenna panel and that is used by the terminal during one uplink transmission. The expected transmit power corresponding to each antenna panel is a transmit power that corresponds to each antenna panel and that is determined by the terminal based on a power control parameter, an uplink scheduling parameter, and the like that are indicated by the base station. Optionally, real PHRs of the plurality of antenna panels are determined based on power control parameters and uplink scheduling parameters that correspond to the plurality of antenna panels during one uplink transmission.

The uplink transmission based on two antenna panels in the terminal is used as an example. Real PHRs of the two antenna panels meet the following conditions:

$$PHR_1 = Pcmax1 - P'_1;$$

and

$$PHR_2 = Pcmax2 - P'_2$$

PHR1 and PHR2 respectively represent a real PHR corresponding to an antenna panel 1 and a real PHR corresponding to an antenna panel 2. Pcmax1 and Pcmax2 respectively represent a maximum transmit power corresponding to the antenna panel 1 and a maximum transmit power corresponding to the antenna panel 2. $P_1'$ and $P_2'$ respectively represent an expected transmit power corresponding to the antenna panel 1 and an expected transmit power corresponding to the antenna panel 2.

For a process in which the terminal determines expected transmit powers of the two antenna panels, refer to FIG. 4. A process in which the terminal determines the maximum transmit power corresponding to each of the two antenna panels may include: both Pcmax1 and Pcma2 may be equal to Pcmax/2, in other words, the maximum transmit power Pcmax of the terminal is equally divided into two parts, and each part is used as the maximum transmit power of each of the two antenna panels. Alternatively, similar to Pcmax, values of Pcmax1 and Pcmax2 may be determined by the terminal from a value range that meets a specific condition. Specifically, the condition that needs to be met includes one or more of the following:

$$\text{Condition 1: } Pcmax1 + Pcmax2 \leq TRPmax$$

Pcmax1 and Pcmax2 respectively represent the maximum transmit power corresponding to the antenna panel 1 and the maximum transmit power corresponding to the antenna panel 2. TRPmax represents a maximum value of a total transmit power specified in a protocol. As constrained by Condition 1, a sum (Pcmax1 + Pcmax2) of the maximum transmit powers of the two antenna panels does not exceed the maximum value of the total transmit power TRPmax of the terminal specified in the protocol. Units of Pcmax1, Pcmax2, and TRPmax are linear power units such as watt W or milliwatt mW.

$$\text{Condition 2: } Ptmax1 + Ptmax2 \leq TRPmax$$

Ptmax1 and Ptmax2 respectively represent a power actually radiated when the antenna panel 1 transmits an uplink signal by using Pcmax1 and a power actually radiated when the antenna panel 2 transmits an uplink signal by using Pcmax2. As constrained by Condition 2, a sum of total powers actually radiated by the two antenna panels does not exceed the maximum value of the total transmit power TRPmax specified in a protocol. Units of Ptmax1, Ptmax2, and TRPmax are linear power units such as watt W or milliwatt mW.

$$\text{Condition 3: } Ptmax \leq TRPmax$$

Ptmax represents a sum of powers actually radiated when the antenna panel 1 and the antenna panel 2 transmit uplink signals by using Pcmax1 and Pcmax2, respectively. A substantive constraint of Condition 3 is the same as that of Condition 2, and a difference lies in that descriptions of the two are slightly different.

$$\text{Condition 4: } EIRPmin + \Delta P_{IBE} - MPR - \Delta panel1 \leq Pumax1 \leq EIRPmax;$$

$$EIRPmin + \Delta P_{IBE} - MPR - \Delta panel2 \leq Pumax2 \leq EIRPmax$$

and

Pumax1 and Pumax2 respectively represent peak EIRPs corresponding to the two antenna panels when Pcmax1 and Pcmax2 are respectively used by the two antenna panels in the terminal. EIRPmin and EIRPmax respectively represent the minimum value of the peak EIRP and the maximum value of the peak EIRP specified in the protocol. $\Delta P_{IBE}$ indicates the quantity related to power aggregation. MPR indicates a quantity related to power reduction. $\Delta panel1$ and $\Delta panel2$ are two offsets. The offset may be a quantity related to transmission for which the antenna panel is used. For example, when a single antenna panel is used for transmission, the offset does not exist, or a value of the offset is 0. The offset exists, or a value of the offset is not equal to 0, only when a plurality of antenna panels are used for simultaneous transmission. The value of the offset is related to a corresponding antenna panel, for example, related to a quantity of antenna ports of the antenna panel, a power amplifier parameter, and the like. The value of the offset may also be related to a quantity of antenna panels used for simultaneous transmission. For example, when two antenna panels are used for simultaneous transmission, the offset is equal to 3 dB. Values of the foregoing two offsets may be the same or different. For example, Δpanel1, Δpanel2, and the like may be separately determined based on specifications of the two antenna panels. As constrained by the foregoing Condition 4, the peak EIRP corresponding to each of the two antenna panels should be greater than or equal to a lower limit of the peak EIRP, where the lower limit of the peak EIRP is equal to the minimum value of the peak EIRP specified in the protocol plus the quantity $\Delta P_{IBE}$ related to the power aggregation, minus the maximum power reduction MPR, and minus an additional offset Δpanel, and is less than or equal to an upper limit of the peak EIRP. It should be understood that Δpanel1 and Δpanel2 in the foregoing formula represent an additional offset, and a variable form of the offset in the protocol is not limited. The two variable forms Δpanel1 and Δpanel2 are merely used as examples, and the two offsets may be represented in any form.

In Condition 4, constraints on Pumax1 and Pumax2 are similar to the overall constraint structure in the procedure in FIG. 4. A difference lies in that a numerical value Δpanel is further subtracted from the left side (that is, the minimum value of the peak EIRP EIRPmin) of the inequality in the foregoing Condition 4, and the numerical value is related to the antenna panel. A reason for subtracting the numerical value Δpanel from the left side of the inequality in the foregoing Condition 4 includes: When the terminal uses two antenna panels for transmission, both the two antenna panels can obtain only a partial power. Therefore, a numerical value needs to be subtracted from the lower limit. Otherwise, the terminal cannot select Pcmax1 and Pcmax2 that meet a condition because the lower limit is set to an excessively high value. In the foregoing Condition 4, each parameter is in a logarithmic unit dBm or dB.

Optionally, inequalities in the foregoing Condition 4 may be extended. For example, one or more numerical values are further added to or subtracted from the minimum value of the peak EIRP or the maximum value of the peak EIRP in the foregoing Condition 4. For example, Pumax1 corresponding to the antenna panel 1 is used as an example. EIRPmin + $\Delta P_{IBE}$ - MPR - Δpanel1 ≤ Pumax1 ≤ EIRPmax in Condition 4 may further be replaced with:

$$EIRPmin + \Delta P_{IBE} - MPR \leq Pumax1 \leq EIRPmax - \Delta panel1;$$

or

$$EIRPmin + \Delta P_{IBE} - MPR - \Delta panel1 \leq Pumax1 \leq EIRPmax - \Delta panel1,$$

or the like.

It may be understood that similar extension may also be performed on Pumax2 corresponding to the antenna panel 2.

Optionally, the foregoing Condition 4 may be further described as follows:

$$P_{Powerclass} + \Delta P_{IBE} - MAX(MAX(MPR_{f,c}, A\text{-}MPR_{f,c},) + \Delta MBP_{,n}, P\text{-}MPR_{f,c}) - MAX\{T(MAX(MPR_{f,c}, A\text{-}MPR_{f,c},)), T(P\text{-}MPR_{f,c})\} - \Delta panel1 \leq P_{UMAX,f,c,1} \leq EIRPmax;$$

and

$$P_{Powerclass} + \Delta P_{IBE} - MAX(MAX(MPR_{f,c}, A\text{-}MPR_{f,c},) + \Delta MBP_{,n}, P\text{-}MPR_{f,c}) - MAX\{T(MAX(MPR_{f,c}, A\text{-}MPR_{f,c},)), T(P\text{-}MPR_{f,c})\} - \Delta panel2 \leq P_{UMAX,f,c,2} \leq EIRPmax.$$

Alternatively, the foregoing Condition 4 is described as follows:

$$P_{Powerclass} + \Delta P_{IBE} - MAX(MAX(MPR_{f,c}, A\text{-}MPR_{f,c},) + \Delta MBP_{,n}, P\text{-}MPR_{f,c}) - MAX\{T(MAX(MPR_{f,c}, A\text{-}MPR_{f,c},)), T(P\text{-}MPR_{f,c})\} \leq P_{UMAX,f,c,1} \leq EIRPmax - \Delta panel1;$$

and

$$P_{Powerclass} + \Delta P_{IBE} - MAX(MAX(MPR_{f,c}, A\text{-}MPR_{f,c,}) + \Delta MB_{P,n}, P\text{-}MPR_{f,c}) -$$

$$MAX\{T(MAX(MPR_{f,c}, A\text{-}MPR_{f,c,})), T(P\text{-}MPR_{f,c})\} \leq P_{UMAX,f,c,2} \leq EIRPmax - \Delta panel2.$$

Alternatively, the foregoing Condition 4 is described as follows:

$$P_{Powerclass} + \Delta P_{IBE} - MAX(MAX(MPR_{f,c}, A\text{-}MPR_{f,c,}) + \Delta MB_{P,n}, P\text{-}MPR_{f,c}) -$$

$$MAX\{T(MAX(MPR_{f,c}, A\text{-}MPR_{f,c,})), T(P\text{-}MPR_{f,c})\} - \Delta panel 1 \leq P_{UMAX,f,c,1} \leq EIRPmax -$$

$$\Delta panel1;$$

and

$$P_{Powerclass} + \Delta P_{IBE} - MAX(MAX(MPR_{f,c}, A\text{-}MPR_{f,c,}) + \Delta MB_{P,n}, P\text{-}MPR_{f,c}) -$$

$$MAX\{T(MAX(MPR_{f,c}, A\text{-}MPR_{f,c,})), T(P\text{-}MPR_{f,c})\} - \Delta panel 2 \leq P_{UMAX,f,c,2} \leq EIRPmax -$$

$$\Delta panel2.$$

$P_{Powerclass}$ represents the minimum value of the peak EIRP, $\Delta P_{IBE}$ represents the quantity related to the power aggregation, $MPR_{f,c}$ represents a maximum output power reduction (maximum output power reduction) corresponding to a carrier f of a cell c, $A\text{-}MPR_{f,c}$ represents an additional maximum output power reduction (additional maximum power reduction) corresponding to the carrier f of the cell c, $P\text{-}MPR_{f,c}$ represents an additional output power reduction (additional maximum power reduction) corresponding to the carrier f of the cell c, $\Delta MB_{P,n}$ represents a relaxation quantity of the peak EIRP, and T(X) is a formula and represents tolerance to x. EIRPmax represents the maximum value of the peak EIRP. $P_{UMAX,f,c,1}$ represents the maximum transmit power corresponding to the antenna panel 1 when the terminal sends an uplink signal on the carrier f of the cell c. $P_{UMAX,f,c,2}$ represents the maximum transmit power corresponding to the antenna panel 2 when the terminal sends the uplink signal on the carrier f of the cell c.

In another design, the terminal may report a virtual PHR to the base station. During virtual PHR reporting, the terminal reports virtual PHRs of the plurality of antenna panels to the base station. A virtual PHR of each antenna panel is equal to a difference between the maximum transmit power corresponding to the antenna panel and the expected transmit power corresponding to the antenna panel. A virtual transmit power corresponding to each antenna panel is a maximum transmit power used by each antenna panel to determine the virtual PHR, and the expected transmit power corresponding to each antenna panel is a transmit power that corresponds to each antenna panel and that is determined by the terminal based on a power control parameter indicated by the base station. For a process of determining the expected transmit power corresponding to each antenna panel during the virtual PHR reporting, refer to the descriptions in FIG. 4. An example in which the terminal includes two antenna panels is used to describe a process of determining the maximum transmit power corresponding to each antenna panel during the virtual PHR reporting of the terminal. Specifically, maximum transmit powers of the two antenna panels need to meet the following conditions:

$$\text{Condition 1:}\ \tilde{P}cmax1 + \tilde{P}cmax2 \leq TRPmax$$

$\tilde{P}cmax1$ and $\tilde{P}cmax2$ respectively represent the maximum transmit powers corresponding to the two antenna panels; and TRPmax represents an upper limit of a total transmit power specified in a protocol. As constrained by Condition 1, the maximum transmit powers of the two antenna panels do not exceed the upper limit of the total transmit power TRPmax specified in the protocol.

$$\text{Condition 2:}\ Ptmax1 + Ptmax2 \leq TRPmax$$

Ptmax1 and Ptmax2 respectively represent a power actually radiated when the antenna panel 1 uses $\tilde{P}cmax1$ and a power actually radiated when the antenna panel 2 uses $\tilde{P}cmax2$. As constrained by Condition 2, a sum of total powers actually radiated by the two antenna panels does not exceed the upper limit of the total transmit power TRPmax specified in a protocol.

$$\text{Condition 3: } \mathrm{Ptmax} \leq \mathrm{TRPmax}$$

Ptmax represents a sum of actual radiated powers when the antenna panel 1 and the antenna panel 2 use $\tilde{\mathrm{P}}$cmax1 and $\tilde{\mathrm{P}}$cmax2, respectively. A substantive constraint of Condition 3 is the same as that of Condition 2, and a difference lies in that descriptions of the two are slightly different.

$$\text{Condition 4: } \mathrm{EIRPmin} - \Delta\mathrm{panel1} \leq \mathrm{Pumax1} \leq \mathrm{EIRPmax};$$
$$\mathrm{EIRPmin} - \Delta\mathrm{panel2} \leq \mathrm{Pumax2} \leq \mathrm{EIRPmax}$$

and

Pumax1 and Pumax2 respectively represent peak EIRPs corresponding to the two antenna panels when $\tilde{\mathrm{P}}$cmax1 and $\tilde{\mathrm{P}}$cmax2 are respectively used by the two antenna panels. EIRPmin represents the lower limit of the peak EIRP specified in the protocol. EIRPmax represents the upper limit of the peak EIRP specified in the protocol. $\Delta$panel1 and $\Delta$panel2 represent numerical values related to the antenna panel, and values of the two may be the same or different. For example, $\Delta$panel 1 and $\Delta$panel 2 may be separately determined based on specifications of the two antenna panels. During the virtual PHR reporting, constraints on Pumax1 and Pumax2 are similar to those in the overall structure in FIG. 4. A difference lies in that a numerical value $\Delta$panel related to the antenna panel is further subtracted from the left side of the inequality (that is, the lower limit EIRPmin). A reason is as follows: When the terminal uses two antenna panels for simultaneous transmission, only a partial power can be allocated to the two antenna panels. Therefore, one piece of data needs to be subtracted from the lower limit. Otherwise, the terminal cannot select $\tilde{\mathrm{P}}$cmax1 and $\tilde{\mathrm{P}}$cmax2 that meet a requirement because the lower limit may be set to an excessively high value.

Optionally, inequalities in the foregoing Condition 4 may be extended. For example, one or more numerical values are further added to or subtracted from the upper limit or lower limit of the inequalities in Condition 4. For example, $\Delta$panel1 and $\Delta$panel2 are respectively subtracted from the right side of the inequalities in Condition 4. The numerical value $\Delta P_{\mathrm{IBE}}$ related to the power aggregation is added to the left side of each inequality in Condition 4.

Optionally, in step 601, in addition to reporting the indication information of the PHRs of the plurality of antenna panels to the base station, the terminal may further report other extension information to the base station, for example, a difference between PHRs corresponding to two antenna panels. This is not limited. In this application, the PHRs of the plurality of antennas reported by the terminal to the base station are all real PHRs or all virtual PHRs. Generally, the PHRs of the plurality of antennas reported by the terminal do not include both a real PHR and a virtual PHR. Optionally, if the terminal reports real PHRs of the plurality of antenna panels to the base station at a time, these real PHRs are calculated based on expected transmit powers of two antenna panels during one uplink transmission.

A format of the PHR reported by the terminal device to a network device may include two Pcmax values that respectively correspond to two antenna panels. Three Pcmax values may be included, where a 1st Pcmax value is a total maximum transmit power of the terminal device, and the remaining two Pcmax values respectively correspond to two antenna panels, or the first two Pcmax values respectively correspond to two antenna panels, and a last Pcmax value is a total maximum transmit power of the terminal device.

Step 602: The base station adjusts the scheduling policy for the terminal based on the PHR reported by the terminal. Step 602 is optional.

This step is similar to step 402. If the PHR reported by the terminal is a positive value, it indicates that the terminal still has a power headroom. In this case, during next scheduling, the base station may schedule more frequency domain resources for the terminal, or increase a closed-loop power control adjustment value $P_{\mathrm{TPC}}$, to make use of the remaining power headroom. Alternatively, if the PHR reported by the terminal is a negative value, it indicates that the expected transmit power calculated based on a current scheduling status is greater than the maximum transmit power of the terminal. In this case, during next scheduling, the base station may schedule fewer frequency domain resources for the terminal, decrease a closed-loop power control adjustment value $P_{\mathrm{TPC}}$, or the like.

According to the foregoing method, the corresponding maximum transmit power may be determined for each antenna panel, and the PHR corresponding to each antenna panel is independently calculated, so that the base station can optimize scheduling or power control of each antenna panel.

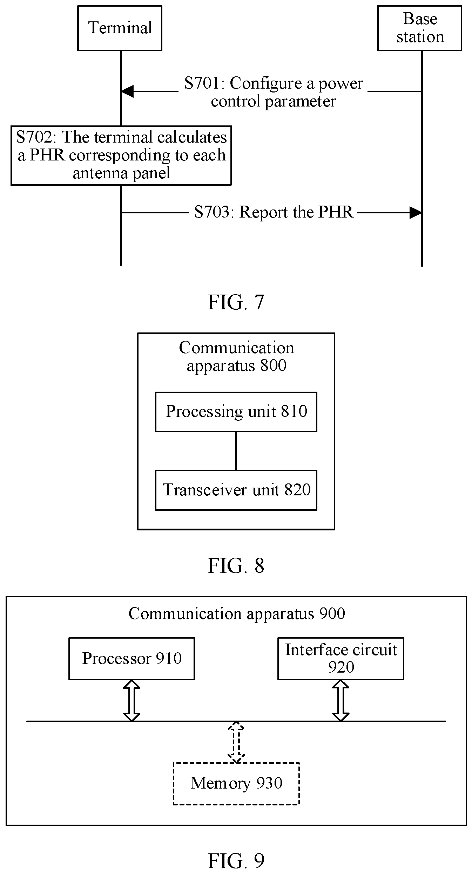

As shown in FIG. 7, this application provides a procedure of a PHR reporting method. The procedure may be used as an implementation of the procedure shown in FIG. 6. The procedure includes at least the following steps.

Step 701: A base station configures a power control parameter for a terminal.

Refer to the descriptions in step 500 in FIG. 5, the terminal may configure at least one set of power control parameters for the terminal by using RRC signaling, where the power control parameter is used to determine an expected transmit power of an antenna panel. A plurality of antenna panels in the terminal may share a set of power control parameters, or different antenna panels in the terminal correspond to different power control parameters.

Step 702: The terminal calculates a PHR corresponding to each antenna panel.

For example, the terminal determines, based on the power control parameter configured by the base station, the expected transmit power corresponding to each antenna panel. Optionally, for real PHR reporting, in a process of determining the expected transmit power of the antenna panel, not only impact of the power control parameter needs to be considered, but also an uplink transmission scheduling parameter configured by the base station needs to be considered. In other words, during the real PHR reporting, the terminal determines, based on the power control parameter and the uplink transmission scheduling parameter, the expected transmit power corresponding to each antenna panel. During virtual PHR reporting, the terminal determines, based on the power control parameter, the expected transmit power corresponding to each antenna panel. For a specific process, refer to the descriptions in FIG. 4. The terminal determines, based on the maximum transmit power corresponding to each antenna panel and the expected transmit power corresponding to each antenna panel, the PHR corresponding to each antenna panel. For example, the PHR corresponding to each antenna panel is equal to a difference between the maximum transmit power corresponding to the antenna panel and the expected transmit power corresponding to the antenna panel. The terminal reports the PHR corresponding to each of the plurality of antenna panels to the base station. For a process of determining the maximum transmit power corresponding to each antenna panel, refer to the descriptions in FIG. 6.

Step 703: The terminal reports the PHR corresponding to each of the plurality of antenna panels to the base station.

Optionally, in addition to reporting the PHR corresponding to each antenna panel to the base station, the terminal may further report other extension information to the base station, for example, a difference between PHRs corresponding to different antenna panels. The PHRs of the plurality of antenna panels reported by the terminal to the base station may be all real PHRs or all virtual PHRs. If the terminal reports the real PHRs of the plurality of antenna panels to the base station, the real PHRs of the plurality of antenna panels are determined based on expected transmit powers respectively corresponding to the plurality of antenna panels during one uplink transmission. For example, the terminal may determine, based on uplink transmission scheduling parameters respectively corresponding to the plurality of antenna panels during the one uplink transmission, the expected transmit power corresponding to each of the plurality of antenna panels; and determine the PHR of each antenna panel based on the expected transmit power of each of the plurality of antenna panels and the maximum transmit power of each antenna panel during the one uplink transmission.

According to the foregoing method, the current maximum transmit power of the terminal is extended, and the maximum transmit power corresponding to each antenna panel is defined. The terminal determines, based on the maximum transmit power corresponding to each antenna panel and the expected transmit power corresponding to each antenna panel, the power headroom corresponding to each antenna panel, and reports the power headroom corresponding to each antenna panel to the base station. In comparison with a design, the terminal determines the power headroom based on the maximum transmit power of the terminal and the expected transmit power of the antenna panel, so that accuracy of the determined power headroom can be improved.

It may be understood that, to implement the functions in the foregoing method, the terminal and the base station include corresponding hardware structures and/or software structures for performing the functions. A person skilled in the art should be easily aware that, with reference to units and method steps in the examples described in this application, this application can be implemented by hardware or a combination of hardware and computer software. Whether a function is performed by hardware or hardware driven by computer software depends on particular application scenarios and design constraint conditions of the technical solutions.

FIG. 8 and FIG. 9 are diagrams of structures of possible apparatuses according to this application. These apparatuses can implement a function of the terminal in the foregoing method, and therefore can also implement beneficial effects of the foregoing method.

As shown in FIG. 8, a communication apparatus 800 includes a processing unit 810 and a transceiver unit 820. The transceiver unit 820 may also be referred to as a communication unit, a communication interface, or the like. The communication apparatus 800 is configured to implement a function of the terminal in the method shown in FIG. 4 or FIG. 6.

For example, the communication apparatus 800 may further include a storage unit. The storage unit may be configured to store instructions and/or data. The processing unit 810 may read the instructions and/or the data in the storage unit, so that the communication apparatus 800 implements the function of the terminal in the foregoing method embodiments.

The communication apparatus 800 may be configured to perform an action performed by the terminal in FIG. 4 or FIG. 6 in the foregoing method embodiments. The communication apparatus 800 may be a terminal or a component (a processor, a chip, or the like) disposed in the terminal. The processing unit 810 is configured to perform a processing related operation of the terminal in the foregoing method embodiments. The transceiver unit 820 is configured to perform receiving and sending related operations of the terminal in the foregoing method embodiments. Specifically, for example: When the communication apparatus 800 is configured to implement the function of the terminal in the method shown in FIG. 4, the transceiver unit 820 is configured to send first indication information to a network device, where the first indication information indicates a power headroom, and the power headroom is a power headroom determined based on a maximum transmit power of the terminal and expected transmit powers respectively corresponding to at least two antenna panels or transmission beams in the terminal. Optionally, the processing unit 810 is configured to determine the first indication information.

When the communication apparatus 800 is configured to implement the function of the terminal in the method shown in FIG. 6, the transceiver unit 820 is configured to send third indication information to a network device, where the third indication information indicates power headrooms respectively corresponding to a plurality of antenna panels or transmission beams in the terminal, and the power headroom corresponding to each antenna panel or transmission beam is determined based on a maximum transmit power corresponding to each antenna panel or transmission beam and an expected transmit power corresponding to each antenna panel or transmission beam. Optionally, the processing unit 810 is configured to determine the third indication information and the like.

Optionally, the transceiver unit 820 may include a sending unit and a receiving unit. The sending unit is configured to perform a sending function of the terminal in the foregoing method embodiments. The receiving unit may be configured to perform a receiving function of the terminal in the foregoing method embodiments. It should be noted that when the communication apparatus 800 is configured to implement the function of the terminal in FIG. 4 or FIG. 6, the communication apparatus 800 may include only the sending unit, where the sending unit is configured to send the first indication information or the third indication information to the network device, and does not include the receiving unit. Whether the communication apparatus 800 specifically includes the sending unit and the receiving unit depends on whether the terminal includes a sending action and a receiving action.

For more detailed descriptions of the processing unit 810 and the transceiver unit 820, refer directly to the related descriptions in the method shown in FIG. 4 or FIG. 6. Details are not described herein again.

As shown in FIG. 9, a communication apparatus 900 includes a processor 910 and an interface circuit 920. The processor 910 and the interface circuit 920 are coupled to each other. It may be understood that the interface circuit 920 may be a transceiver, an input/output interface, a pin, or the like. Optionally, the communication apparatus 900 may further include a memory 930, configured to store instructions executed by the processor 910, or store input data needed by the processor 910 to run the instructions, or store data generated after the processor 910 runs the instructions.

When the communication apparatus 900 is configured to implement the method in FIG. 4 or FIG. 6, the processor 910 is configured to implement a function of the foregoing processing unit 810, and the interface circuit 920 is configured to implement a function of the foregoing transceiver unit 820.

When the communication apparatus is a chip used in a terminal, the terminal chip implements a function of the terminal in the foregoing method embodiments. The terminal chip receives information from another module (for example, a radio frequency module or an antenna) in the terminal, where the information is sent by a base station to the terminal, and the receiving information may be considered as inputting the information into the terminal chip; or the terminal chip sends information to another module (for example, a radio frequency module or an antenna) in the terminal, where the information is sent by the terminal to a base station, and the sending information may be considered as outputting the information from the terminal chip.

This application further provides a communication apparatus 1000. The communication apparatus 1000 may be a terminal, a processor of the terminal, a chip, or the like. The communication apparatus 1000 may perform operations performed by the terminal in the method embodiments in FIG. 4 or FIG. 6.

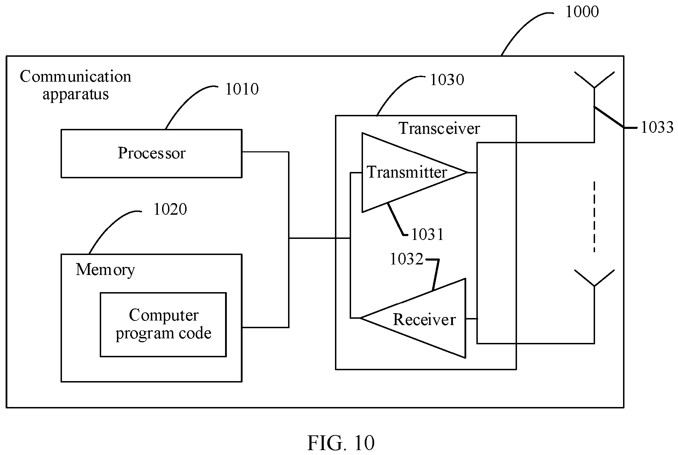

When the communication apparatus 1000 is the terminal, FIG. 10 is a diagram of a simplified structure of the terminal. As shown in FIG. 10, the terminal includes a processor 1010, a memory 1020, and a transceiver 1030. The memory 1020 may store computing program code. The transceiver 1030 includes a transmitter 1031, a receiver 1032, a radio frequency circuit (not shown in the figure), an antenna 1033, and an input/output apparatus (not shown in the figure).

The processor 1010 is mainly configured to process a communication protocol and communication data, control the terminal, execute a software program, process data of the software program, and the like. The memory 1020 is mainly configured to store the software program and the data. The radio frequency circuit is mainly configured to perform conversion between a baseband signal and a radio frequency signal, and process the radio frequency signal. The antenna 1033 is mainly configured to receive and send the radio frequency signal in a form of an electromagnetic wave. The input/output apparatus, for example, a touchscreen, a display, or a keyboard, is mainly configured to receive data input by a user, and output data to the user. It should be noted that some types of terminals may have no input/output apparatus.

When data needs to be sent, the processor 1010 performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave through the antenna. When data is sent to the terminal, the radio frequency circuit receives the radio frequency signal through the antenna, converts the radio frequency signal into a baseband signal, and outputs the baseband signal to the processor 1010. The processor 1010 converts the baseband signal into data, and processes the data. For ease of description, FIG. 10 shows only one memory, one processor, and one transceiver. In an actual terminal product, there may be one or more processors and one or more memories. The memory may also be referred to as a storage medium, a storage device, or the like. The memory may be disposed independent of the processor, or may be integrated with the processor. This is not limited in embodiments of this application.

In this application, the antenna having receiving and sending functions and the radio frequency circuit may be considered as a transceiver unit of the terminal, and the processor having a processing function is considered as a processing unit of the terminal.

The processor 1010 may also be referred to as a processing unit, a processing board, a processing module, a processing apparatus, or the like. The transceiver 1030 may also be referred to as a transceiver unit, a transceiver, a transceiver apparatus, or the like.

Optionally, a component that is in the transceiver 1030 and that is configured to implement a receiving function may be considered as a receiving unit, and a component that is in the transceiver 1030 and that is configured to implement a sending function may be considered as a sending unit. In other words, the transceiver 1030 includes the receiver and the transmitter. The transceiver may also be sometimes referred to as a transceiver machine, a transceiver unit, a transceiver circuit, or the like. The receiver sometimes may also be referred to as a receiving machine, a receiving unit, a receiving circuit, or the like. The transmitter sometimes may also be referred to as a transmitting machine, a transmitting unit, a transmitting circuit, or the like.

For example, in an implementation, the transceiver 1030 is configured to perform receiving and sending actions on a terminal side in FIG. 4. For example, the transceiver 1030 is configured to perform S401 in the embodiment shown in FIG. 4, to send first indication information to a network device. Optionally, the processor 1010 is configured to determine the first indication information and the like.

Alternatively, in an implementation, the transceiver 1030 is configured to perform receiving and sending actions on a terminal side in the embodiment shown in FIG. 6. For example, the transceiver 1030 is configured to perform S601 in the embodiment shown in FIG. 6, to send third indication information to the network device. Optionally, the processor 1010 is configured to determine third indication information and the like.

When the communication apparatus 1000 is a chip, the chip includes a processor, a memory, and a transceiver. The transceiver may be an input/output circuit or a communication interface. The processor may be a processing module, a microprocessor, or an integrated circuit integrated on the chip. The sending operation of the terminal in the foregoing method embodiments may be understood as an output of the chip, and the receiving operation of the terminal in the foregoing method embodiments may be understood as an input of the chip.

It may be understood that the processor in this application may be a central processing unit (central processing unit, CPU), or may be another general-purpose processor, a digital signal processor (digital signal processor, DSP), or an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The memory in this application may be a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art.

For example, the storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or the terminal. Certainly, the processor and the storage medium may exist in the base station or the terminal as discrete components.

A method in this application may be wholly or partially implemented by software, hardware, firmware, or any combination thereof. When software is used to implement the method, the method may be wholly or partially implemented in a form of a computer program product. The computer program product includes one or more computer programs or instructions. When the computer programs or the instructions are loaded and executed on a computer, the procedures or functions according to this application are wholly or partially generated. The computer may be a general-purpose computer, a dedicated computer, a computer network, a network device, user equipment, a core network device, an operation, administration, and maintenance (operation, administration, and maintenance, OAM), or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc;

or may be a semiconductor medium, for example, a solid-state drive. The computer-readable storage medium may be a volatile or non-volatile storage medium, or may include both a volatile storage medium and a non-volatile storage medium.

In this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects. "Including at least one of A, B, or C" may indicate: including A; including B; including C; including A and B; including A and C; including B and C; and including A, B, and C.

It may be understood that various numerals used in this application are merely differentiated for ease of description, but are not used to limit the scope of this application. Sequence numbers of the foregoing processes do not mean an execution sequence, and the execution sequence of the processes should be determined based on functions and internal logic of the processes.

**Claims**

1. A power headroom reporting method, comprising:

   sending first indication information to a network device, wherein the first indication information indicates a power headroom, wherein
   the power headroom is a power headroom determined based on a maximum transmit power of a terminal and expected transmit powers respectively corresponding to at least two antenna panels or transmission beams in the terminal.

2. The method according to claim 1, wherein a value of the power headroom is equal to a difference between the maximum transmit power of the terminal and a sum of the expected transmit powers respectively corresponding to the at least two antenna panels or transmission beams in the terminal.

3. The method according to claim 1 or 2, wherein the power headroom is a real power headroom, the maximum transmit power of the terminal is a maximum transmit power used by the terminal during one uplink transmission, and an expected transmit power corresponding to each antenna panel or transmission beam is a transmit power that corresponds to each antenna panel or transmission beam and that is determined by the terminal based on a power control parameter and an uplink transmission scheduling parameter that are indicated by the network device.

4. The method according to claim 1 or 2, wherein the power headroom is a virtual power headroom, the maximum transmit power of the terminal is a maximum transmit power used to determine the virtual power headroom, and an expected transmit power corresponding to each antenna panel or transmission beam is a transmit power that corresponds to each antenna panel or transmission beam and that is determined by the terminal based on a power control parameter indicated by the network device.

5. The method according to any one of claims 1 to 4, further comprising:
   sending second indication information to the network device, wherein the second indication information indicates at least one of the following:
   a relationship between expected transmit powers respectively corresponding to different antenna panels or transmission beams, a relationship between path loss measurement values respectively corresponding to different antenna panels or transmission beams, or a power headroom corresponding to each antenna panel or transmission beam.

6. The method according to claim 5, wherein the relationship between the expected transmit powers respectively corresponding to the different antenna panels or transmission beams comprises a difference, a proportional relationship, or a value relationship between the expected transmit powers respectively corresponding to the different antenna panels or transmission beams.

7. The method according to claim 5 or 6, wherein the relationship between the path loss measurement values respectively corresponding to the different antenna panels or transmission beams comprises a difference, a proportional relationship, or a value relationship between the path loss measurement values respectively corresponding to the different antenna panels or transmission beams.

8. The method according to any one of claims 5 to 7, wherein the power headroom corresponding to each antenna panel or transmission beam is determined based on the maximum transmit power of the terminal and the expected transmit power corresponding to each antenna panel or transmission beam.

9. A power headroom reporting method, comprising:

sending third indication information to a network device, wherein the third indication information indicates power headrooms respectively corresponding to a plurality of antenna panels or transmission beams in a terminal, wherein

a power headroom corresponding to each antenna panel or transmission beam is determined based on a maximum transmit power corresponding to each antenna panel or transmission beam and an expected transmit power corresponding to each antenna panel or transmission beam.

10. The method according to claim 9, wherein maximum transmit powers respectively corresponding to the plurality of antenna panels or transmission beams meet at least one of the following:

a sum of the maximum transmit powers respectively corresponding to the plurality of antenna panels or transmission beams does not exceed a first threshold;
a sum of actual radiated powers corresponding to the maximum transmit powers respectively corresponding to the plurality of antenna panels or transmission beams does not exceed a second threshold; or
a peak effective isotropic radiated power EIRP of the maximum transmit power corresponding to each of the plurality of antenna panels or transmission beams does not exceed a third threshold and is not less than a fourth threshold.

11. The method according to claim 10, wherein the first threshold and the second threshold are preset maximum transmit power values.

12. The method according to claim 10 or 11, wherein the third threshold is a preset maximum value of the peak EIRP, or the third threshold is a preset maximum value of the peak EIRP minus an offset related to the antenna panel or transmission beam.

13. The method according to any one of claims 10 to 12, wherein the fourth threshold is a preset minimum value of the peak EIRP plus a quantity related to power aggregation, and then minus a quantity related to power reduction and the offset related to the antenna panel or transmission beam.

14. The method according to any one of claims 9 to 13, wherein the power headrooms respectively corresponding to the plurality of antenna panels or transmission beams are all real power headrooms, the maximum transmit power corresponding to each antenna panel or transmission beam is a maximum transmit power that corresponds to each antenna panel or transmission beam and that is used by the terminal during one uplink transmission, and the expected transmit power corresponding to each antenna panel or transmission beam is a transmit power that corresponds to each antenna panel or transmission beam and that is determined by the terminal based on a power control parameter and an uplink transmission scheduling parameter that are indicated by the network device.

15. The method according to claim 14, wherein the real power headrooms respectively corresponding to the plurality of antenna panels or the plurality of transmission beams are determined based on power control parameters and uplink scheduling parameters that respectively correspond to the plurality of antenna panels or the plurality of transmission beams during one uplink transmission.

16. The method according to any one of claims 9 to 13, wherein the power headrooms respectively corresponding to the plurality of antenna panels or transmission beams are all virtual power headrooms, the maximum transmit power corresponding to each antenna panel or transmission beam is a maximum transmit power used by each antenna panel or transmission beam to determine a virtual power headroom, and the expected transmit power corresponding to each antenna panel or transmission beam is a transmit power that corresponds to each antenna panel or transmission beam and that is determined by the terminal based on a power control parameter indicated by the network device.

17. A communication apparatus, comprising:

a transceiver unit, configured to send first indication information to a network device, wherein the first indication information indicates a power headroom, wherein
the power headroom is a power headroom determined based on a maximum transmit power of a terminal and expected transmit powers respectively corresponding to at least two antenna panels or transmission beams in the terminal.

18. The apparatus according to claim 17, wherein a value of the power headroom is equal to a difference between the maximum transmit power of the terminal and a sum of the expected transmit powers respectively corresponding to the at least two antenna panels or transmission beams in the terminal.

19. The apparatus according to claim 17 or 18, wherein the power headroom is a real power headroom, the maximum transmit power of the terminal is a maximum transmit power used by the terminal during one uplink transmission, and an expected transmit power corresponding to each antenna panel or transmission beam is a transmit power that corresponds to each antenna panel or transmission beam and that is determined by the terminal based on a power control parameter and an uplink transmission scheduling parameter that are indicated by the network device.

20. The apparatus according to claim 17 or 18, wherein the power headroom is a virtual power headroom, the maximum transmit power of the terminal is a maximum transmit power used to determine the virtual power headroom, and an expected transmit power corresponding to each antenna panel or transmission beam is a transmit power that corresponds to each antenna panel or transmission beam and that is determined by the terminal based on a power control parameter indicated by the network device.

21. The apparatus according to any one of claims 17 to 20, wherein the transceiver unit is further configured to:
send second indication information to the network device, wherein the second indication information indicates at least one of the following:
a relationship between expected transmit powers respectively corresponding to different antenna panels or transmission beams, a relationship between path loss measurement values respectively corresponding to different antenna panels or transmission beams, or a power headroom corresponding to each antenna panel or transmission beam.

22. The apparatus according to claim 21, wherein the relationship between the expected transmit powers respectively corresponding to the different antenna panels or transmission beams comprises a difference, a proportional relationship, or a value relationship between the expected transmit powers respectively corresponding to the different antenna panels or transmission beams.

23. The apparatus according to claim 21 or 22, wherein the relationship between the path loss measurement values respectively corresponding to the different antenna panels or transmission beams comprises a difference, a proportional relationship, or a value relationship between the path loss measurement values respectively corresponding to the different antenna panels or transmission beams.

24. The apparatus according to any one of claims 21 to 23, wherein the power headroom corresponding to each antenna panel or transmission beam is determined based on the maximum transmit power of the terminal and the expected transmit power corresponding to each antenna panel or transmission beam.

25. A communication apparatus, comprising:

a transceiver unit, configured to send third indication information to a network device, wherein the third indication information indicates power headrooms respectively corresponding to a plurality of antenna panels or transmission beams in a terminal, wherein
a power headroom corresponding to each antenna panel or transmission beam is determined based on a maximum transmit power corresponding to each antenna panel or transmission beam and an expected transmit power corresponding to each antenna panel or transmission beam.

26. The apparatus according to claim 25, wherein maximum transmit powers respectively corresponding to the plurality of antenna panels or transmission beams meet at least one of the following:

> a sum of the maximum transmit powers respectively corresponding to the plurality of antenna panels or transmission beams does not exceed a first threshold;
> a sum of actual radiated powers corresponding to the maximum transmit powers respectively corresponding to the plurality of antenna panels or transmission beams does not exceed a second threshold; or
> a peak effective isotropic radiated power EIRP of the maximum transmit power corresponding to each of the plurality of antenna panels or transmission beams does not exceed a third threshold and is not less than a fourth threshold.

27. The apparatus according to claim 26, wherein the first threshold and the second threshold are preset maximum transmit power values.

28. The apparatus according to claim 26 or 27, wherein the third threshold is a preset maximum value of the peak EIRP, or the third threshold is a preset maximum value of the peak EIRP minus an offset related to the antenna panel or transmission beam.

29. The apparatus according to any one of claims 26 to 28, wherein the fourth threshold is a preset minimum value of the peak EIRP plus a quantity related to power aggregation, and then minus a quantity related to power reduction and the offset related to the antenna panel or transmission beam.

30. The apparatus according to any one of claims 25 to 29, wherein the power headrooms respectively corresponding to the plurality of antenna panels or transmission beams are all real power headrooms, the maximum transmit power corresponding to each antenna panel or transmission beam is a maximum transmit power that corresponds to each antenna panel or transmission beam and that is used by the terminal during one uplink transmission, and the expected transmit power corresponding to each antenna panel or transmission beam is a transmit power that corresponds to each antenna panel or transmission beam and that is determined by the terminal based on a power control parameter and an uplink transmission scheduling parameter that are indicated by the network device.

31. The apparatus according to claim 30, wherein the real power headrooms respectively corresponding to the plurality of antenna panels or the plurality of transmission beams are determined based on power control parameters and uplink scheduling parameters that respectively correspond to the plurality of antenna panels or the plurality of transmission beams during one uplink transmission.

32. The apparatus according to any one of claims 25 to 29, wherein the power headrooms respectively corresponding to the plurality of antenna panels or transmission beams are all virtual power headrooms, the maximum transmit power corresponding to each antenna panel or transmission beam is a maximum transmit power used by each antenna panel or transmission beam to determine a virtual power headroom, and the expected transmit power corresponding to each antenna panel or transmission beam is a transmit power that corresponds to each antenna panel or transmission beam and that is determined by the terminal based on a power control parameter indicated by the network device.

33. A communication apparatus, comprising a processor and a memory, wherein the processor is coupled to the memory, and the processor is configured to execute a computer program or instructions stored in the memory, to implement the method according to any one of claims 1 to 8, or implement the method according to any one of claims 9 to 16.

34. A communication apparatus, comprising a processor, wherein the processor is configured to implement the method according to any one of claims 1 to 8, or the method according to any one of claims 9 to 16.

35. A computer-readable storage medium, wherein the computer-readable storage medium stores instructions; and when the instructions are run on a computer, the computer is enabled to perform the method according to any one of claims 1 to 8, or the method according to any one of claims 9 to 16.

36. A computer program product, wherein the computer program product comprises a computer program or instructions; and when the computer program or the instructions are run on a computer, the computer is enabled to perform the method according to any one of claims 1 to 8, or the method according to any one of claims 9 to 16.

**37.** A chip system, comprising a processor, wherein the processor is configured to implement the method according to any one of claims 1 to 8, or the method according to any one of claims 9 to 16.

**38.** The system according to claim 37, further comprising a memory.

**39.** The system according to claim 37 or 38, wherein the chip system comprises a chip.

**40.** The system according to claim 39, wherein the chip system further comprises another discrete component.

FIG. 1

FIG. 2

$$PHR = P_{cmax} - P_1'$$
or
$$PHR = P_{cmax} - P_2'$$

FIG. 3

| Terminal | | Base station |
|---|---|---|

S401: First indication information, where the first indication information indicates a PHR

S402: Adjust a scheduling policy for the terminal based on the PHR reported by the terminal

FIG. 4

| Terminal | | Base station |
|---|---|---|

S501: Configure a power control parameter

S502: The terminal calculates a PHR

S503: Report the PHR

FIG. 5

| Terminal | | Base station |
|---|---|---|

S601: Third indication information, indicating PHRs respectively corresponding to a plurality of antenna panels in the terminal

S602: Adjust a scheduling policy for the terminal based on the PHR reported by the terminal

FIG. 6

| Terminal | | Base station |
|---|---|---|

S701: Configure a power control parameter

S702: The terminal calculates a PHR corresponding to each antenna panel

S703: Report the PHR

FIG. 7

Communication apparatus 800

Processing unit 810

Transceiver unit 820

FIG. 8

Communication apparatus 900

Processor 910

Interface circuit 920

Memory 930

FIG. 9

FIG. 10

## INTERNATIONAL SEARCH REPORT

| International application No. |
|---|
| **PCT/CN2023/076902** |

**A. CLASSIFICATION OF SUBJECT MATTER**

H04W52/36(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, VCN, CNKI, 3GPP: 功率, 余量, 报告, 面板, 波束, 发送功率, 发射功率, 传输功率, 和, 差, 最大, 期望, 功控, 功率控制, PHR, power, headroom, report, panel, beam, transmi+, sum, difference

**C. DOCUMENTS CONSIDERED TO BE RELEVANT**

| Category* | Citation of document, with indication, where appropriate, of the relevant passages | Relevant to claim No. |
|---|---|---|
| Y | WO 2021184301 A1 (QUALCOMM INCORPORATED) 23 September 2021 (2021-09-23) claims 1-9, and description, paragraphs 0002, 0077-0080, 0124, and 0130 | 1-40 |
| Y | CN 107889209 A (HUAWEI TECHNOLOGIES CO., LTD.) 06 April 2018 (2018-04-06) claims 1-7 and 27 | 1-40 |
| A | CN 108810964 A (HUAWEI TECHNOLOGIES CO., LTD.) 13 November 2018 (2018-11-13) entire document | 1-40 |
| A | HUAWEI et al. "PHR with multi-beam operation" *3GPP TSG-RAN WG2#100 R2-1713177*, 01 December 2017 (2017-12-01), entire document | 1-40 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 April 2023** | **20 April 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/076902**

| Patent document cited in search report | | | Publication date (day/month/year) | Patent family member(s) | | | Publication date (day/month/year) |
|---|---|---|---|---|---|---|---|
| WO | 2021184301 | A1 | 23 September 2021 | None | | | |
| CN | 107889209 | A | 06 April 2018 | US | 2019223117 | A1 | 18 July 2019 |
| | | | | EP | 3515132 | A1 | 24 July 2019 |
| | | | | AR | 109736 | A1 | 16 January 2019 |
| | | | | WO | 2018059489 | A1 | 05 April 2018 |
| | | | | IN | 201937013096 | A | 24 May 2019 |
| | | | | VN | 64090 | A | 25 June 2019 |
| CN | 108810964 | A | 13 November 2018 | US | 2020145987 | A1 | 07 May 2020 |
| | | | | WO | 2018202083 | A1 | 08 November 2018 |
| | | | | EP | 3614750 | A1 | 26 February 2020 |
| | | | | IN | 201937046428 | A | 10 January 2020 |

Form PCT/ISA/210 (patent family annex) (July 2022)

**EP 4 460 114 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210218301

35